# EUROPEAN PATENT APPLICATION

(11) **EP 2 453 414 A2**
(43) Date of publication of application: **16.05.2012**
(21) Application number: 10792352.6
(22) Date of filing: 25.06.2010
(51) Int. Cl.: G06T 13/00

(54) **VIRTUAL WORLD PROCESSING DEVICE AND METHOD**

(30) Priority: 25.06.2009 KR 20090057312; 21.10.2009 KR 20090100365; 28.10.2009 KR 20090103038
(71) Applicant: Samsung Electronics Co., Ltd., Suwon-si, Gyeonggi-do 443-742 (KR)
(72) Inventor: LEE, Hyun Jeong, Yongin-si Gyeonggi-do 446-712 (KR); HAN, Jae Joon, Yongin-si Gyeonggi-do 446-712 (KR); HAN, Seung Ju, Yongin-si Gyeonggi-do 446-712 (KR); PARK, Joon Ah, Yongin-si Gyeonggi-do 446-712 (KR)
(74) Representative: Land, Addick Adrianus Gosling
(86) International application number: PCT/KR2010/004126
(87) International publication number: WO 2010/151070

(57) **Abstract**

A method and apparatus for processing a virtual world are provided. A data structure of a virtual object of a virtual world may be defined, and a virtual world object of the virtual world may be controlled, and accordingly an object in a real world may be reflected to the virtual world. Additionally, the virtual world object may migrate between virtual worlds, using the defined data structure.

## Description

One or more embodiments relate to a method and apparatus for processing a virtual world, and more particularly, to a method and apparatus for processing information regarding a virtual object of a virtual world.

Currently, an interest in experience-type games is increasing. Microsoft Corporation announced "Project Natal" at the 'E3 2009' Press Conference. "Project Natal" may provide a body motion capturing scheme, a facial recognition scheme, and a speech recognition scheme by combining Microsoft's Xbox 360 game console with a separate sensor device being comprised of a depth/color camera and a microphone array, thereby enabling a user to interact with a virtual world without using a separate controller. Also, Sony Corporation announced "Wand" as an experience-type game motion controller that may enable a user to interact with the virtual world through inputs of motion trajectory of the controller by applying, to the PlayStation 3 game console, a location/direction sensing technology obtained by combining a color camera, a marker, and a ultrasonic sensor.

Interaction between the real world and the virtual world may have two directions. First, a direction in which data information obtained from a sensor in the real world is reflected on the virtual world may be provided. Second, another direction in which data information obtained from the virtual world is reflected on the real world using an actuator may be provided.

Accordingly, there is a desire to implement an interaction between the real world and the virtual world, and thereby provide an apparatus, a method, and a command structure that may control information regarding an object of the virtual world by applying data obtained from a sensor in the real world to the virtual world.

### SUMMARY

According to an aspect of one or more embodiments, there may be provided a virtual world processing apparatus for enabling an interoperability between a virtual world and a real world or an interoperability between virtual worlds, the virtual world processing apparatus including a control unit to control a virtual world object in a virtual world, wherein the virtual world object is classified into an avatar and a virtual object, and wherein the virtual object includes elements 'Appearance' and 'Animation' with extension of a base type of the virtual world object.

According to embodiments, it is possible to define a data structure of a virtual object of a virtual world, and to control a virtual world object of the virtual world, thereby reflecting an object of a real world to the virtual world.

Additionally, it is possible to enable a virtual world object to migrate between virtual worlds, using the defined data structure.

### BRIEF DESCRIPTION OF THE DRAWINGS

FIG. 1 illustrates an operation of manipulating an object of a virtual world using a sensor according to an embodiment.
FIG. 2 illustrates a structure of a system associated with exchange of information and data between a real world and a virtual world according to an embodiment.
FIG. 3 illustrates operations of using a virtual world processing apparatus according to an embodiment.
FIG. 4 illustrates an example in which an object of a virtual world is transformed according to an embodiment.
FIG. 5 illustrates a data structure of a virtual world object according to an embodiment.
FIG. 6 illustrates a data structure of 'identification' according to an embodiment.
FIG. 7 illustrates a data structure of 'VWOSoundListType' according to an embodiment.
FIG. 8 illustrates a data structure of 'VWOScentListType' according to an embodiment.
FIG. 9 illustrates a data structure of 'VWOControlListType' according to an embodiment.
FIG. 10 illustrates a data structure of 'VWOEventListType' according to an embodiment.
FIG. 11 illustrates a data structure of 'VWOBehaviorModelListType' according to an embodiment.
FIG. 12 illustrates a data structure of 'VWOSoundType' according to an embodiment.
FIG. 13 illustrates a data structure of 'VWOScentType' according to an embodiment.
FIG. 14 illustrates a data structure of 'VWOControlType' according to an embodiment.
FIG. 15 illustrates a data structure of 'VWOEventType' according to an embodiment.
FIG. 16 illustrates a data structure of 'VWOBehaviorModelType' according to an embodiment.
FIG. 17 illustrates a data structure of 'VWOHapticPropertyType' according to an embodiment.
FIG. 18 illustrates a data structure of 'MaterialPropertyType' according to an embodiment.
FIG. 19 illustrates a data structure of 'DynamicForceEffectType' according to an embodiment.
FIG. 20 illustrates a data structure of 'TactileType' according to an embodiment.
FIG. 21 illustrates a data structure of 'DescriptionType' according to an embodiment.
FIG. 22 illustrates a data structure of 'AnimationDescriptionType' according to an embodiment.
FIG. 23 illustrates a data structure of 'AnimationResourcesDescriptionType' according to an embodiment.
FIG. 24 illustrates a data structure of 'VirtualObjectType' according to an embodiment.
FIG. 25 illustrates a data structure of 'VOAnimationType' according to an embodiment.
FIG. 26 is a flowchart illustrating a method of controlling an object of a virtual world in a virtual world processing apparatus according to an embodiment.
FIG. 27 is a flowchart illustrating a method of executing object change with respect to an object of a virtual world in a virtual world processing apparatus according to an embodiment.
FIG. 28 illustrates an operation in which a virtual world processing apparatus converts an identical object, and applies the converted object to virtual worlds that are different from each other, according to an embodiment.
FIG. 29 illustrates a configuration of a virtual world processing apparatus according to an embodiment.

### DETAILED DESCRIPTION

Reference will now be made in detail to exemplary embodiments, examples of which are illustrated in the accompanying drawings, wherein like reference numerals refer to the like elements throughout. Exemplary embodiments are described below to explain the present disclosure by referring to the figures.

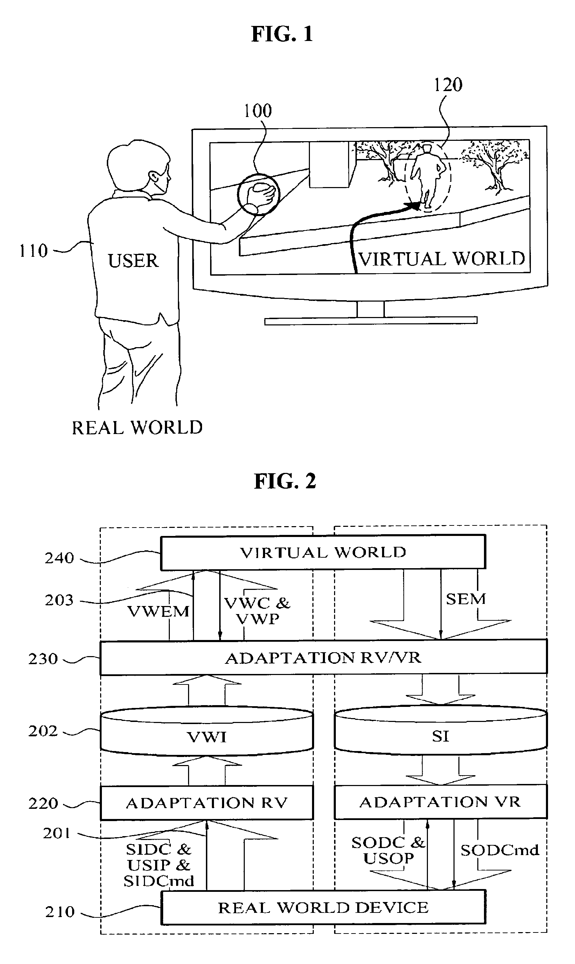

FIG. 1 illustrates an operation of manipulating an object of a virtual world using a sensor according to an embodiment.

Referring to FIG. 1, a user 110 in a real world may manipulate an object 120 of a virtual world using a sensor 100. The user 110 of the real world may input his or her own behavior, state, intention, type, and the like using the sensor 100, and the sensor 100 may enable control information (CI) regarding the behavior, the state, the intention, the type, and the like of the user 110 to be included in a sensor signal, and may transmit the CI to a virtual world processing apparatus.

Depending on embodiments, the user 110 of the real world may be humans, animals, plants, and inanimate objects (e.g., objects), and also may be a surrounding environment of the user.

FIG. 2 illustrates a structure of a system associated with exchange of information and data between a real world and a virtual world according to an embodiment.

Referring to FIG. 2, when a user of the real world inputs an intention of the user using a real world device (e.g., a motion sensor), sensor signals including CI regarding the intention of the user may be transmitted to a virtual world processing apparatus.

The CI may be a command based on values inputted using the real world device, and information associated with the command. The CI may include sensory input device capabilities (SIDC), user sensory input preferences (USIP), and sensory input device commands (SIDCmd).

Adaptation real world to virtual world (hereinafter, referred to as 'adaptation RV') may be implemented by a real world to virtual world engine (hereinafter, referred to as 'RV engine'). The adaptation RV may convert information of the real world into information adaptable in the virtual world. In this instance, the information of the real world may be inputted via the real world device using the CI regarding the behavior, the state, the intention, the type and the like of the user of the real world included in the sensor signals. The above-described adaptation process may have an influence on virtual world information (VWI).

The VWI may be information regarding the virtual world. For example, the VWI may be information regarding elements constituting the virtual world, for example a virtual object or an avatar. The VWI may be changed in the RV engine, in response to commands, for example virtual world effect metadata (VWEM), virtual world preferences (VWP), and virtual world capabilities (VWC).

Table 1 shows configurations described in FIG. 2.

**[Table 1]**

| | | | |
|---|---|---|---|
| SIDC | Sensory input device capabilities | VWI | Virtual world information |
| USIP | User sensory input preferences | SODC | Sensory output device capabilities |
| SIDCmd | Sensory input device commands | USOP | User sensory output preferences |
| VWC | Virtual world capabilities | SODCmd | Sensory output device commands |
| VWP | Virtual world preferences | SEM | Sensory effect metadata |
| VWEM | Virtual world effect metadata | SI | Sensory information |

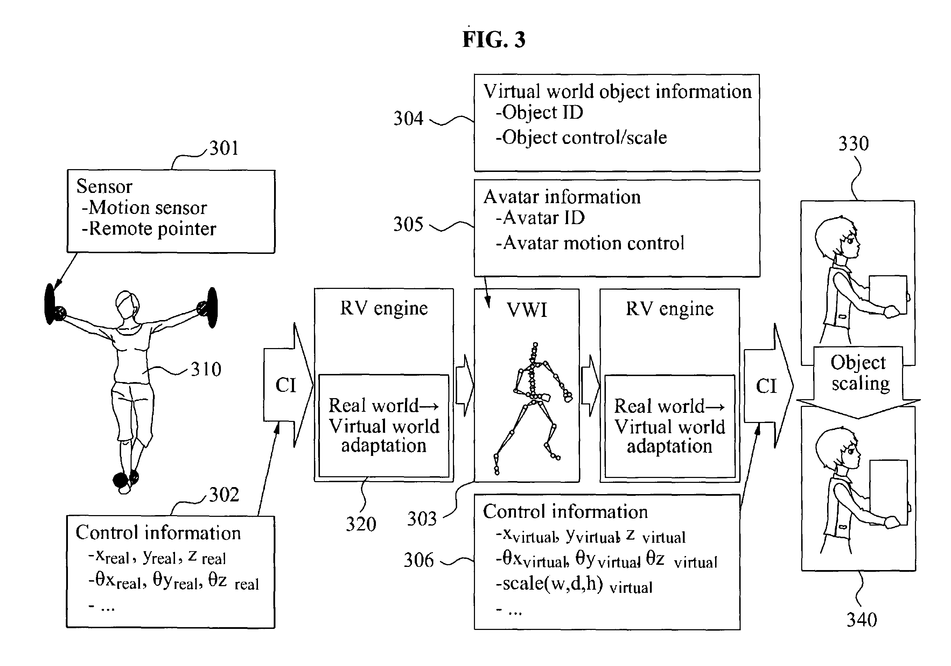

FIG. 3 illustrates operations of using a virtual world processing apparatus according to an embodiment.

Referring to FIG. 3, a user 310 of the real world may input an intention of the user 310 using a sensor 301 according to an embodiment. Depending on embodiments, the sensor 301 may include a motion sensor used to measure behaviors of the user 310, and a remote pointer mounted in ends of arms and legs of the user 310 to measure a direction and a position where the ends of the arms and legs point.

Sensor signals including CI 302 inputted through the sensor 301 may be transmitted to the virtual world processing apparatus. The CI 302 may be associated with an action of spreading the arms of the user 310, a state in which the user 310 stands in place, a position of hands and feet of the user 310, an angle between the spread arms, and the like.

Depending on embodiments, the CI 302 may include SIDC, USIP, and SIDCmd.

Depending on embodiments, the CI 302 may include position information regarding the arms and legs of the user 310 that are expressed as ⊝_{Xreal}, ⊝_{Yreal}, and ⊝_{Zreal}, namely, values of angles with an x-axis, a y-axis, and a z-axis, and that are expressed as Xᵣₑₐₗ, Yᵣₑₐₗ, and Zᵣₑₐₗ, namely, values of the x-axis, the y-axis, and the z-axis.

The virtual world processing apparatus may include an RV engine 320. The RV engine 320 may convert information of the real world into information adaptable in the virtual world, using the CI 302 included in the sensor signals.

Depending on embodiments, the RV engine 320 may convert VWI 303 using the CI 302.

The VWI 303 may be information regarding the virtual world. For example, the VWI 303 may include an object of the virtual world, or information regarding elements constituting the object.

Depending on embodiments, the VWI 303 may include virtual world object information 304, and avatar information 305.

The virtual world object information 304 may be information regarding the object of the virtual world. Depending on embodiments, the virtual world object information 304 may include an object identifier (ID) for identifying an identity of the object of the virtual world, and include object control/scale, namely, information used to control a state, a size, and the like of the object of the virtual world.

The RV engine 320 may convert the VWI 303 by applying, to the VWI 303, information regarding the action of spreading the arms, the state in which the user 310 stands in place, the position of the hands and feet, the angle between the spread arms, and the like, based on the CI 302.

The RV engine 320 may transfer information 306 regarding the converted VWI 303 to the virtual world. Depending on embodiments, the information 306 may include position information regarding arms and legs of an avatar of the virtual world that are expressed as ⊝_{Xreal}, ⊝_{Yreal}, and ⊝_{Zreal}, namely, values of angles with the x-axis, the y-axis, and the z-axis, and that are expressed as Xᵣₑₐₗ, Yᵣₑₐₗ, and Zᵣₑₐₗ, namely, values of the x-axis, the y-axis, and the z-axis. Additionally, the information 306 may include information regarding the size of the object of the virtual world that is expressed as a scale (w, d, h)virtual indicating a width value, a height value, and a depth value of the object.

Depending on embodiments, an avatar in a virtual world 330 to which the information 306 is not transferred may be in a state of holding the object. Additionally, an avatar in a virtual world 340 to which the information 306 is transferred may spread arms of the avatar to scale up the object by applying, to the virtual world 340, the action of spreading the arms, the state in which the user 310 stands in place, the position of the hands and feet, the angle between the spread arms, and the like.

Specifically, when the user 310 of the real world takes a motion of gripping and scaling up the object, the CI 302 regarding the action of spreading the arms, the state in which the user 310 stands in place, the position of the hands and feet, the angle between the spread arms, and the like may be generated using the sensor 301. Additionally, the RV engine 320 may convert the CI 302 associated with the user 310 of the real world, that is, data measured in the real world, into information applicable to the virtual world. The converted information may be applied to a structure of information regarding the avatar and the object of the virtual world, so that a motion of gripping and spreading the object may be applied to the avatar, and that the object may be scaled up.

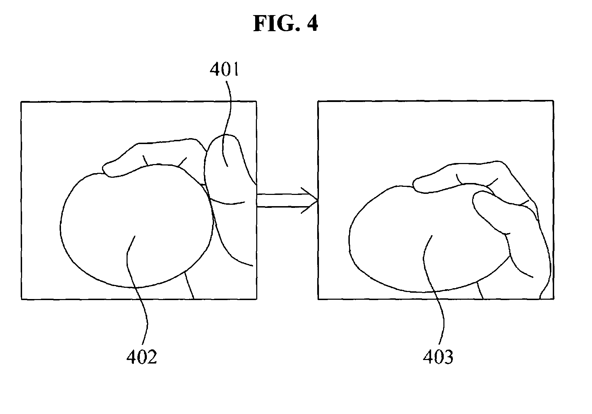

FIG. 4 illustrates an example in which an object of a virtual world is transformed according to an embodiment.

Referring to FIG. 4, according to an aspect, a user in a real world may input an intension of the user using a sensor, and the intension of the user may be applied to a virtual world, so that a hand 401 of an avatar of the virtual world may press a thing. By pressing the thing by the hand 401 of the avatar in the virtual world, power (e.g., vector) may be exerted to a ball 402 of the virtual world, and the ball 402 of the virtual world may have a crushed shape 403 by the power.

A virtual world processing apparatus according to an embodiment may control interoperability between a virtual world and a real world, or interoperability between virtual worlds.

In this instance, the virtual world may be classified into a virtual environment and a virtual world object.

The virtual world object may characterize various types of objects within the virtual environment. Additionally, the virtual world object may provide an interaction within the virtual environment.

The virtual world object may be classified into an avatar and a virtual object. The avatar may be used as a representation of a user within the virtual environment.

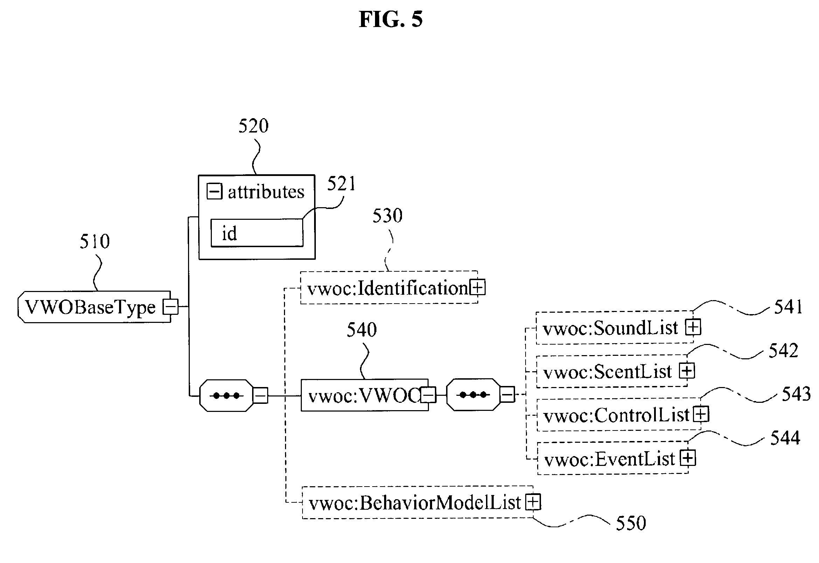

Hereinafter, a virtual world object will be further described with reference to FIGS. 5 through 23.

FIG. 5 illustrates a data structure of a virtual world object according to an embodiment.

Referring to FIG. 5, 'VWOBaseType' 510 indicating a basic data structure of the virtual world object may include attributes 520, and a plurality of characteristics, for example, 'Identification' 530, 'VWOC' 540 and 'BehaviorModelList' 550.

The attributes 520 and the characteristics of 'VWOBaseType' 510 may be shared by both an avatar and a virtual object. In other words, to extend a predetermined aspect of each metadata, 'VWOBaseType' 510 may be inherited to avatar metadata and virtual object metadata. In this instance, the virtual object metadata as a representation of the virtual object within the virtual environment may characterize various types of objects within the virtual environment. Additionally, the virtual object metadata may provide an interaction between the avatar and the virtual object. Furthermore, the virtual object metadata may provide an interaction with the virtual environment.

Depending on embodiments, 'VWOBaseType' 510 may be represented using an extensible Markup Language (XML), as shown in Source 1. However, a program source of Source 1 is merely an example, and there is no limitation thereto.

### [Source 1]

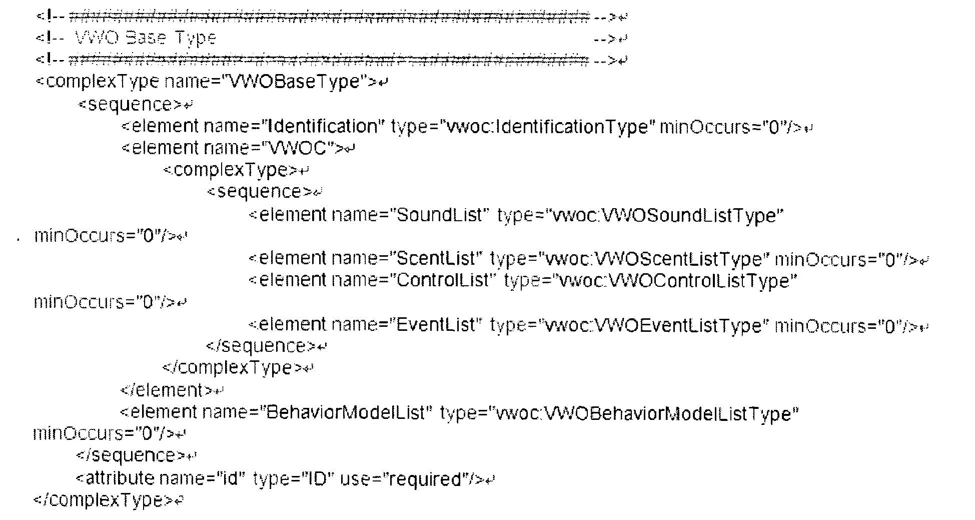

The attributes 520 may include 'id' 521.

'id' 521 may indicate a unique ID to identify an identity of individual virtual world object information.

'VWOBaseType' 510 may include characteristics 'Identification' 530, 'VWOC' 540 and 'BehaviorModelList' 550, as described above.

'Identification' 530 may indicate an identification of a virtual world object.

'VWOC' 540 may indicate a set of characteristics of the virtual world object. 'VWOC' 540 may include 'SoundList' 541, 'ScentList' 542, 'ControlList' 543, and 'EventList' 544. 'SoundList' 541 may indicate a list of sound effects associated with the virtual world object. 'ScentList' 542 may indicate a list of scent effects associated with the virtual world object. 'ControlList' 543 may indicate a list of controls associated with the virtual world object. 'EventList' 544 may indicate a list of input events associated with the virtual world object.

'BehaviorModelList' 550 may indicate a list of behavior models associated with the virtual world object.

Example 1 shows description of 'VWOBaseType' 510. However, Example 1 is merely an example of 'VWOBaseType' 510, and there is no limitation thereto.

### [Example 1]

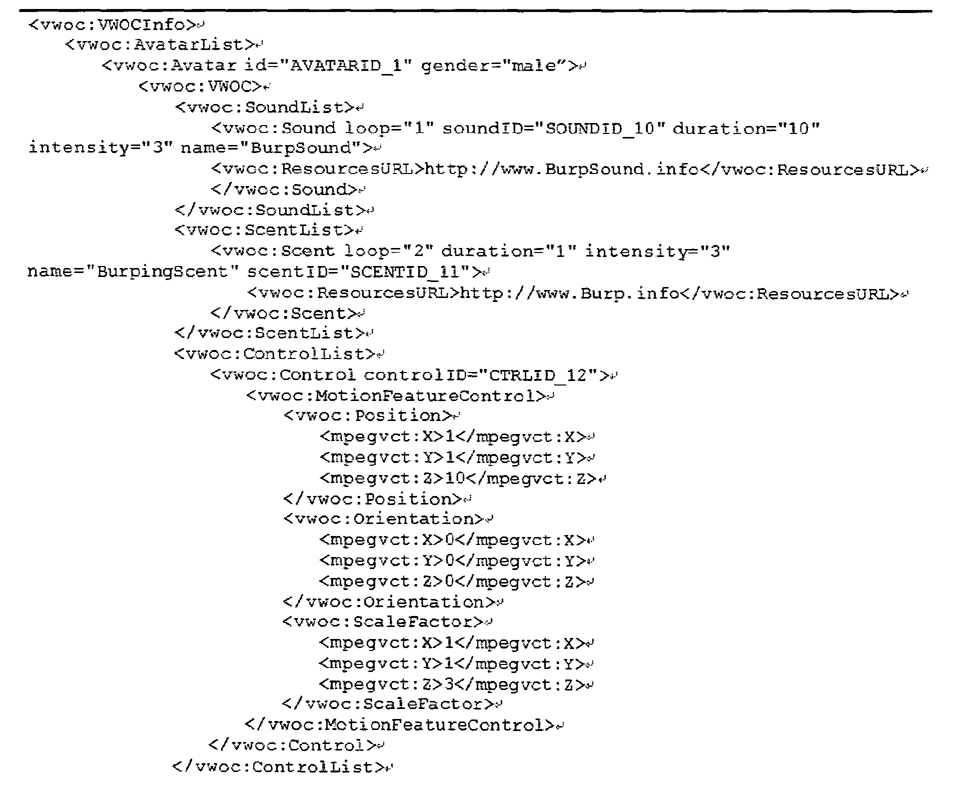

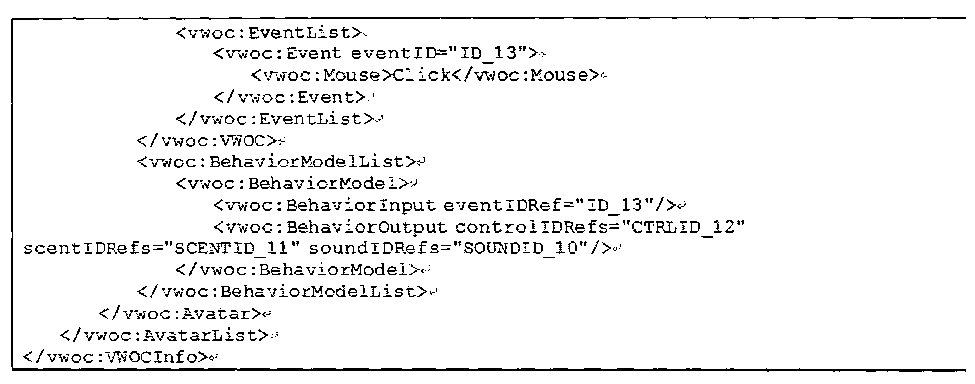

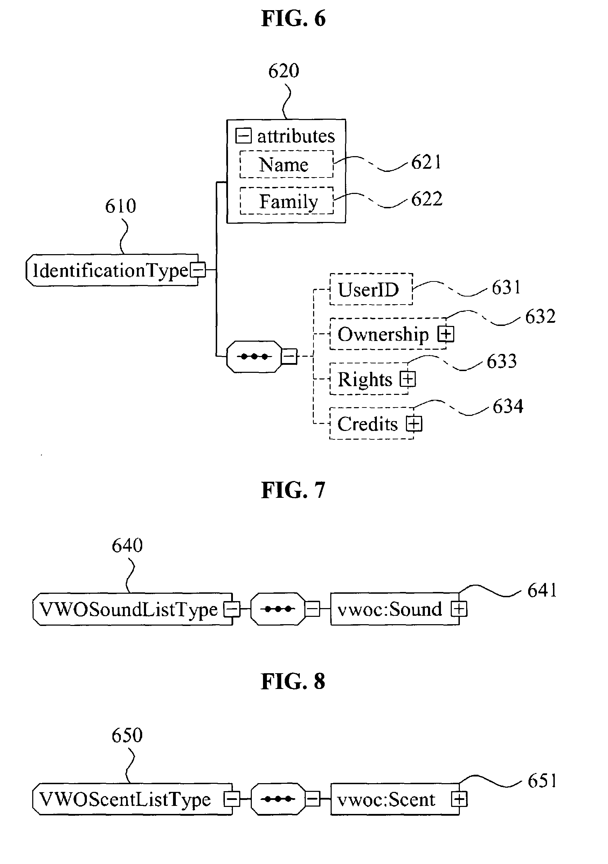

FIG. 6 illustrates a data structure of 'identification' according to an embodiment.

Referring to FIG. 6, 'IdentificationType' 610 representing the data structure of 'identification' may include attributes 620, and a plurality of elements, for example, 'UserID' 631, 'Ownership' 632, 'Rights' 633, and 'Credits' 634.

'IdentificationType' 610 may indicate an identification of a virtual world object.

The attributes 620 may include 'Name' 621 and 'Family' 622.

'Name' 621 may indicate a name of the virtual world object.

'Family' 622 may indicate a relationship with other virtual world objects.

'IdentificationType' 610 may include 'UserID' 631, 'Ownership' 632, 'Rights' 633, and 'Credits' 634, as described above.

'UserID' 631 may contain a user ID associated with the virtual world object.

'Ownership' 632 may indicate an ownership of the virtual world object.

'Rights' 633 may indicate rights of the virtual world object.

'Credits' 634 may indicate contributors of a virtual object in chronological order.

Depending on embodiments, 'IdentificationType' 610 may be represented using the XML, as shown in Source 2. However, a program source of Source 2 is merely an example, and there is no limitation thereto.

### [Source 2]

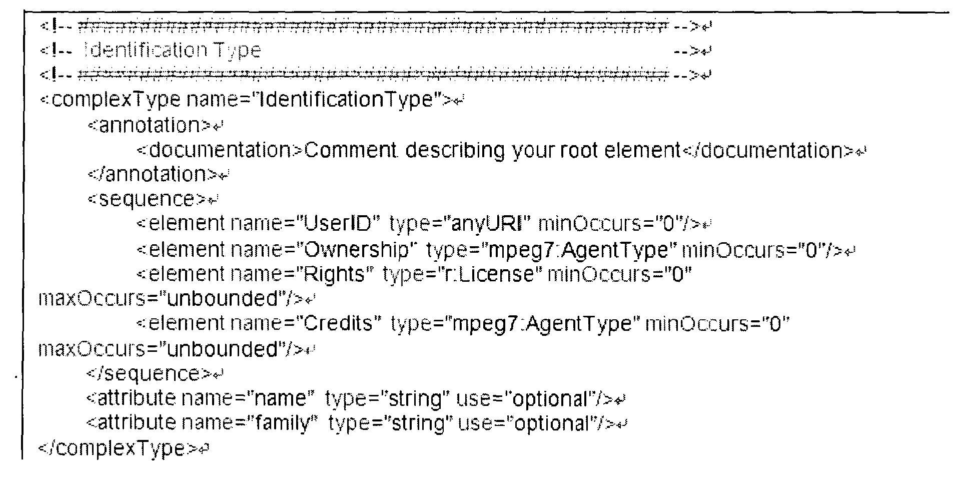

FIG. 7 illustrates a data structure of 'VWOSoundListType' according to an embodiment.

Referring to FIG. 7, 'VWOSoundListType' 640 may include 'Sound' 641.

'VWOSoundListType' 640 may represent a data format of 'SoundList' 541 of FIG. 5.

Additionally, 'VWOSoundListType' 640 may indicate a wrapper element type that allows multiple occurrences of sound effects associated with the virtual world object.

'Sound' 641 may indicate a sound effect associated with the virtual world object.

Depending on embodiments, 'VWOSoundListType' 640 may be represented using the XML, as shown in Source 3. However, a program source of Source 3 is merely an example, and there is no limitation thereto.

### [Source 3]

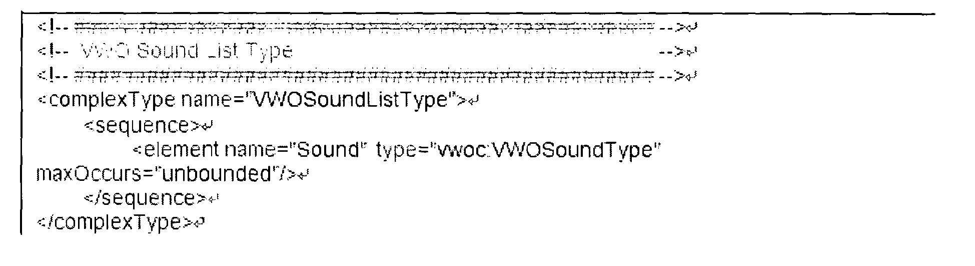

FIG. 8 illustrates a data structure of 'VWOScentListType' according to an embodiment.

Referring to FIG. 8, 'VWOScentListType' 650 may include 'Scent' 651.

'VWOScentListType' 650 may represent a data format of 'ScentList' 542 of FIG. 5.

Additionally, 'VWOScentListType' 650 may indicate a wrapper element type that allows multiple occurrences of scent effects associated with the virtual world object.

'Scent' 651 may indicate a scent effect associated with the virtual world object.

Depending on embodiments, 'VWOScentListType' 650 may be represented using the XML, as shown in Source 4. However, a program source of Source 4 is merely an example, and there is no limitation thereto.

### [Source 4]

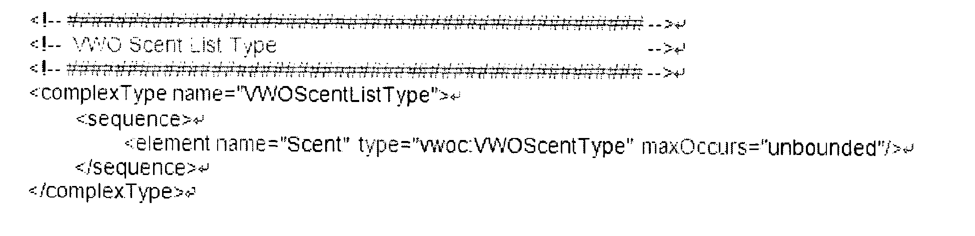

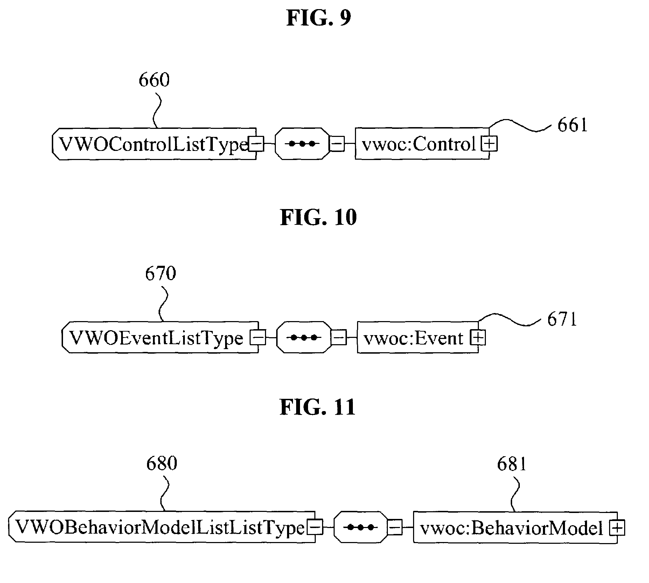

FIG. 9 illustrates a data structure of 'VWOControlListType' according to an embodiment.

Referring to FIG. 9, 'VWOControlListType' 660 may include 'Control' 661.

'VWOControlListType' 660 may represent a data format of 'ControlList' 543 of FIG. 5.

Additionally, 'VWOControlListType' 660 may indicate a wrapper element type that allows multiple occurrences of controls associated with the virtual world object.

'Control' 661 may indicate a control associated with the virtual world object.

Depending on embodiments, 'VWOControlListType' 660 may be represented using the XML, as shown in Source 5. However, a program source of Source 5 is merely an example, and there is no limitation thereto.

### [Source 5]

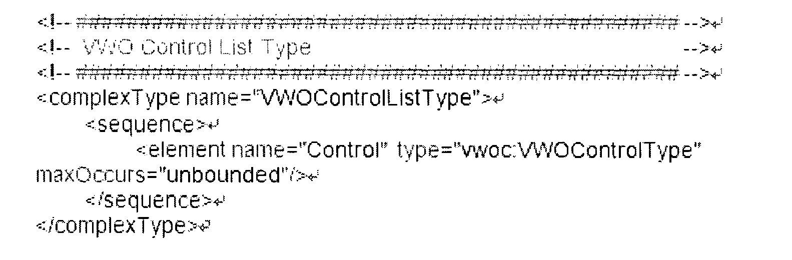

FIG. 10 illustrates a data structure of 'VWOEventListType' according to an embodiment.

Referring to FIG. 10, 'VWOEventListType' 670 may include 'Event' 671.

'VWOEventListType' 670 may represent a data format of 'EventList' 544 of FIG. 5.

Additionally, 'VWOEventListType' 670 may indicate a wrapper element type that allows multiple occurrences of input events associated with the virtual world object.

'Event' 671 may indicate an input event associated with the virtual world object.

Depending on embodiments, 'VWOEventListType' 670 may be represented using the XML, as shown in Source 6. However, a program source of Source 6 is merely an example, and there is no limitation thereto.

### [Source 6]

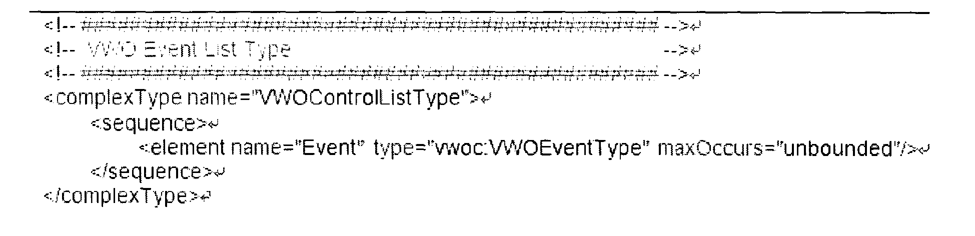

FIG. 11 illustrates a data structure of 'VWOBehaviorModelListType' according to an embodiment.

Referring to FIG. 11, 'VWOBehaviorModelListType' 680 may include 'BehaviorModel' 681.

'VWOBehaviorModelListType' 680 may represent a data format of 'BehaviorModelList' 550 of FIG. 5.

Additionally, 'VWOBehaviorModelListType' 680 may indicate a wrapper element type that allows multiple occurrences of input behavior models associated with the virtual world object.

'BehaviorModel' 681 may indicate an input behavior model associated with the virtual world object.

Depending on embodiments, 'VWOBehaviorModelListType' 680 may be represented using the XML, as shown in Source 7. However, a program source of Source 7 is merely an example, and there is no limitation thereto.

### [Source 7]

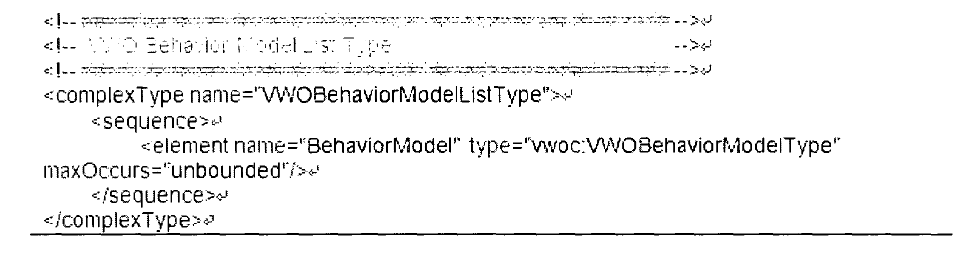

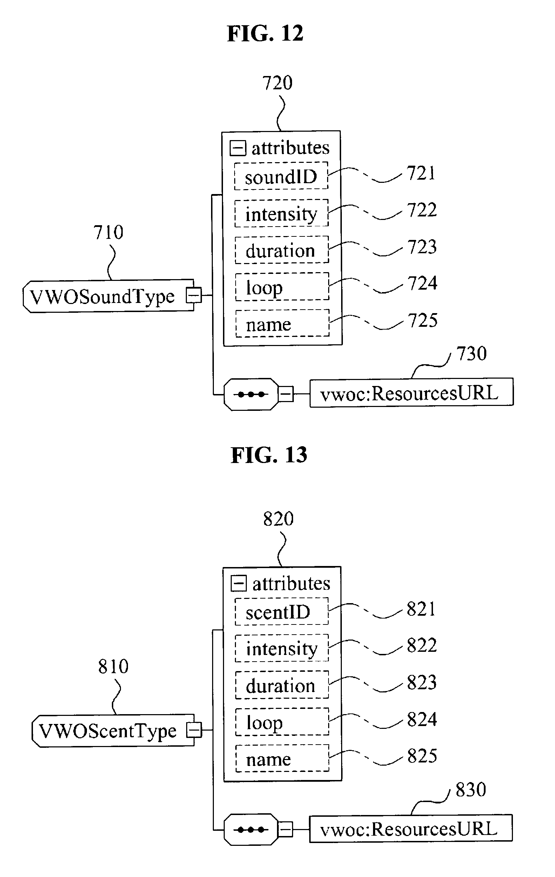

FIG. 12 illustrates a data structure of 'VWOSoundType' according to an embodiment.

Referring to FIG. 12, 'VWOSoundType' 710 may include attributes 720, and 'ResourcesURL' 730 as an element.

'VWOSoundType' 710 may indicate information on the type of sound effects associated with the virtual world object.

Depending on embodiments, 'VWOSoundType' 710 may be represented using the XML, as shown in Source 8. However, a program source of Source 8 is merely an example, and there is no limitation thereto.

### [Source 8]

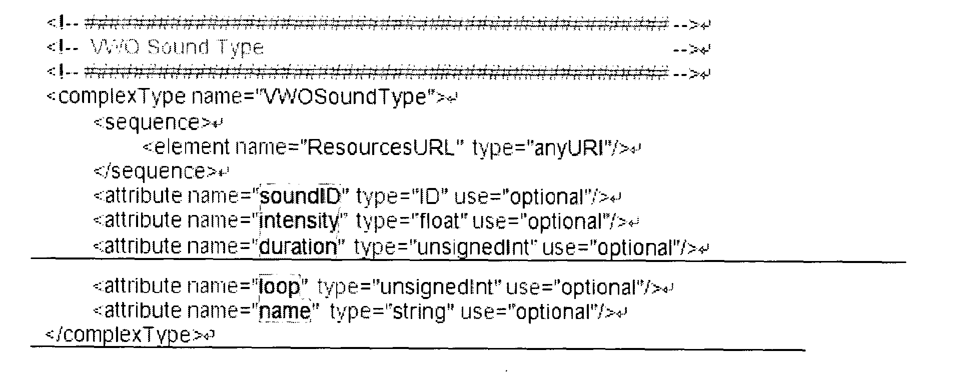

The attributes 720 may include 'SoundID' 721, 'Intensity' 722, 'Duration' 723, 'Loop' 724, and 'Name' 725.

'SoundID' 721 may indicate a unique ID of an object sound.

'Intensity' 722 may indicate a strength of the object sound.

'Duration' 723 may indicate a length of a time that the object sound lasts.

'Loop' 724 may indicate a number of repetitions of the object sound.

'Name' 725 may indicate a name of the object sound.

'ResourcesURL' 730 may include a link to a sound file. Depending on embodiments, the sound file may be an MP4 file.

Example 2 shows description of 'VWOSoundType' 710. However, Example 2 is merely an example of 'VWOSoundType' 710, and there is no limitation thereto.

### [Example 2]

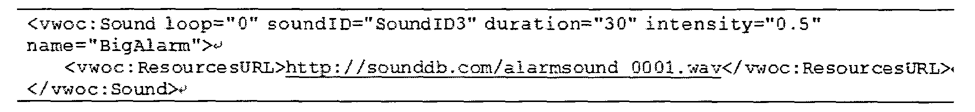

Referring to Example 2, a sound resource whose name is "BigAlarm" is stored at ''http://sounddb.com/alarmsound_0001.wav," and an ID of the sound is "SoundID3." The length of the sound is 30 seconds, and the volume of the sound is 50%.

FIG. 13 illustrates a data structure of 'VWOScentType' according to an embodiment.

Referring to FIG. 13, 'VWOScentType' 810 may include attributes 820, and 'ResourcesURL' 830 as an element.

'VWOScentType' 810 may indicate information on the type of scent effects associated with the virtual world object.

Depending on embodiments, 'VWOScentType' 810 may be represented using the XML, as shown in Source 9. However, a program source of Source 9 is merely an example, and there is no limitation thereto.

### [Source 9]

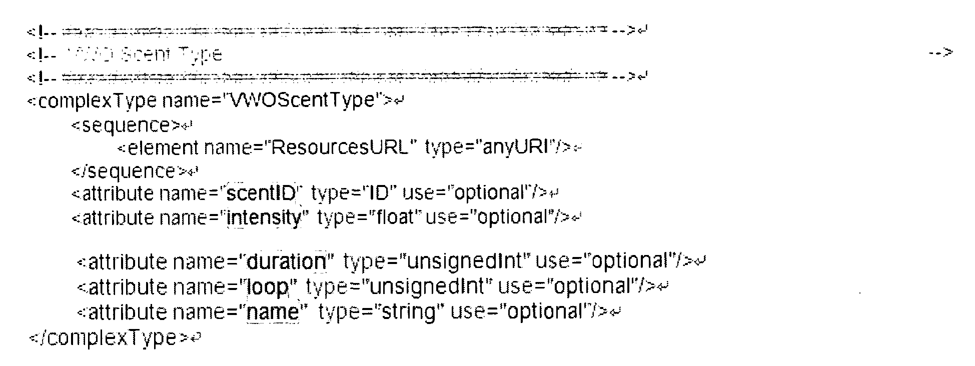

The attributes 820 may include 'ScentID' 821, 'Intensity' 822, 'Duration' 823, 'Loop' 824, and 'Name' 825.

'ScentID' 821 may indicate a unique ID of an object scent.

'Intensity' 822 may indicate a strength of the object scent.

'Duration' 823 may indicate a length of a time that the object scent lasts.

'Loop' 824 may indicate a number of repetitions of the object scent.

'Name' 825 may indicate a name of the object scent.

'ResourcesURL' 830 may include a link to a scent file.

Example 3 shows description of 'VWOScentType' 810. However, Example 3 is merely an example of 'VWOScentType' 810, and there is no limitation thereto.

### [Example 3]

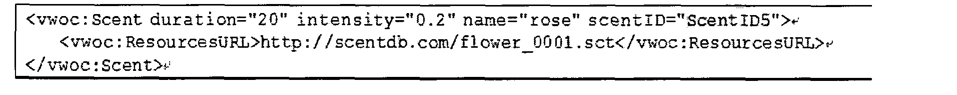

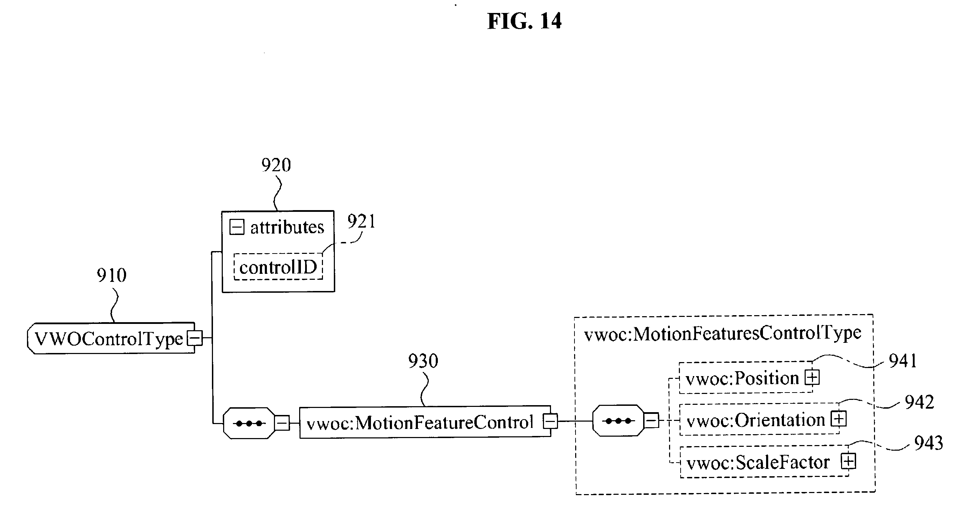

FIG. 14 illustrates a data structure of 'VWOControlType' according to an embodiment.

Referring to FIG. 14, 'VWOControlType' 910 may include attributes 920, and 'MotionFeatureControl' 930.

'VWOControlType' 910 may indicate information on the type of controls associated with the virtual world object.

Depending on embodiments, 'VWOControlType' 910 may be represented using the XML, as shown in Source 10. However, a program source of Source 10 is merely an example, and there is no limitation thereto.

### [Source 10]

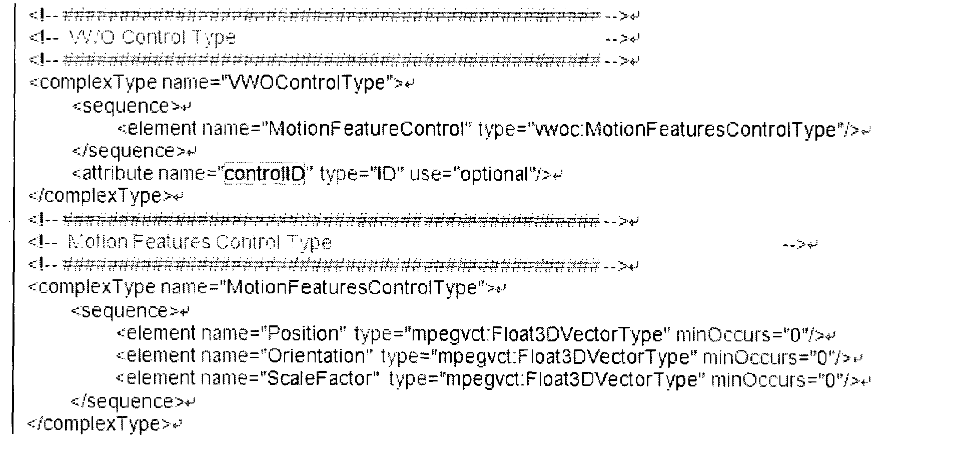

The attributes 920 may include 'ControlID' 921.

'ControlID' 921 may include a unique ID of a control.

'MotionFeatureControl' 930 may indicate a set of elements to control a position, an orientation, and a scale of a virtual object. 'MotionFeatureControl' 930 may include 'Position' 941, 'Orientation' 942, and 'ScaleFactor' 943.

'Position' 941 may indicate a position of an object in a scene. Depending on embodiments, 'Position' 941 may be expressed using a three-dimensional (3D) floating point vector (x, y, z).

'Orientation' 942 may indicate an orientation of an object in a scene. Depending on embodiments, 'Orientation' 942 may be expressed using a 3D floating point vector as based on Euler angle (yaw, pitch, roll).

'ScaleFactor' 943 may indicate a scale of an object in a scene. Depending on embodiments, 'ScaleFactor' 943 may be expressed using a 3D floating point vector (Sx, Sy, Sz).

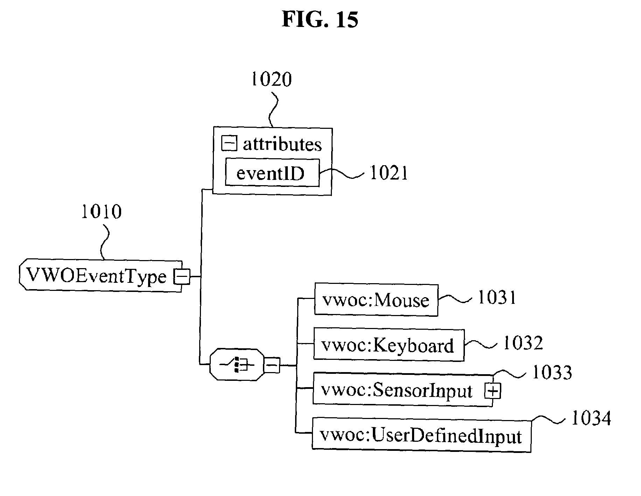

FIG. 15 illustrates a data structure of 'VWOEventType' according to an embodiment.

Referring to FIG. 15, 'VWOEventType' 1010 may include attributes 1020, and a plurality of elements, for example, 'Mouse' 1031, 'Keyboard' 1032, ' SensorInput' 1033, and 'UserDefinedInput' 1034.

'VWOEventType' 1010 may indicate information on the type of an event associated with the virtual world object.

Depending on embodiments, 'VWOEventType' 1010 may be represented using the XML, as shown in Source 11. However, a program source of Source 11 is merely an example, and there is no limitation thereto.

### [Source 11]

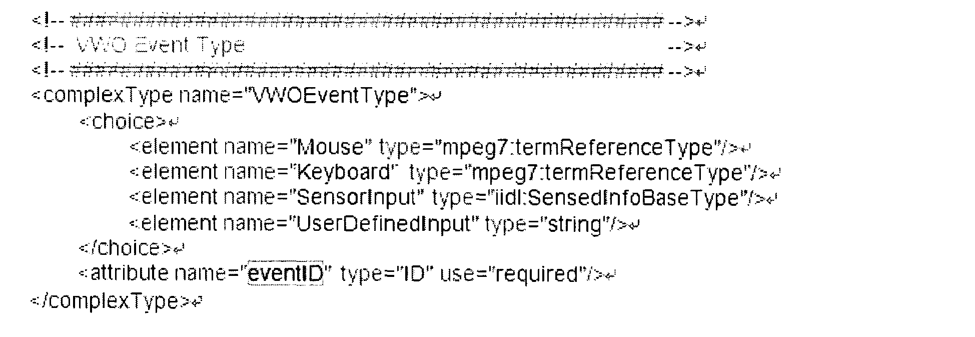

The attributes 1020 may include 'eventID' 1021.

'eventID' 1021 may indicate a unique ID of an event.

'VWOEventType' 1010 may include 'Mouse' 1031, 'Keyboard' 1032, ' SensorInput' 1033, and 'UserDefinedInput' 1034, as described above.

'Mouse' 1031 may indicate a mouse event. Specifically, 'Mouse' 1031 may indicate an event occurring based on an input by manipulating a mouse. Depending on embodiments, 'Mouse' 1031 may include elements shown in Table 2.

**[Table 2]**

| Element | Information |
|---|---|
| Click | Event occurring when clicking on left button of mouse |
| Double_Click | Event occurring when double-clicking left button of mouse |
| LeftBttn_down | Event occurring at the moment of holding down left button of mouse |
| LeftBttn_up | Event occurring at the moment of releasing left button of mouse |
| RightBttn_down | Event occurring at the moment of holding down right button of mouse |
| RightBttn_up | Event occurring at the moment of releasing right button of mouse |
| Move | Event occurring when moving mouse |

'Keyboard' 1032 may indicate a keyboard event. Specifically, 'Keyboard' 1032 may indicate an event occurring based on an input by manipulating a keyboard. Depending on embodiments, 'Keyboard' 1032 may include elements shown in Table 3.

**[Table 3]**

| Element | Information |
|---|---|
| Key_Down | Event occurring at the moment of holding predetermined button of keyboard down |
| Key_Up | Event occurring at the moment of releasing predetermined button of keyboard |

'SensorInput' 1033 may indicate a sensor input event. Specifically, 'SensorInput' 1033 may indicate an event occurring based on an input by manipulating a sensor.

'UserDefinedInput' 1034 may indicate an input event defined by a user.

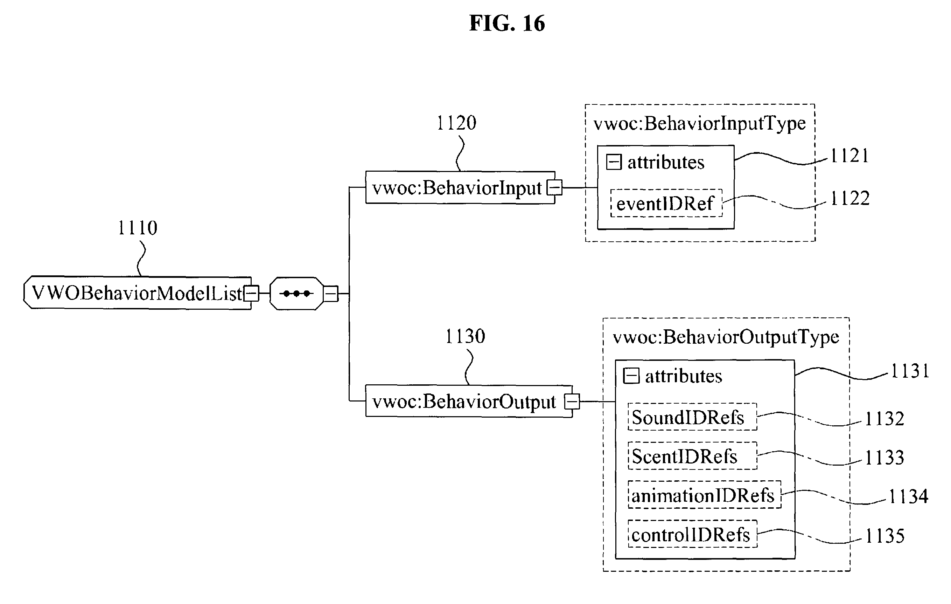

FIG. 16 illustrates a data structure of 'VWOBehaviorModelType' according to an embodiment.

Referring to FIG. 16, 'VWOBehaviorModelType' 1110 may include 'BehaviorInput' 1120 and 'BehaviorOutput' 1130.

'VWOBehaviorModelType' 1110 may indicate information on the type of a behavior model associated with the virtual world object.

Depending on embodiments, 'VWOBehaviorModelType' 1110 may be represented using the XML, as shown in Source 12. However, a program source of Source 12 is merely an example, and there is no limitation thereto.

### [Source 12]

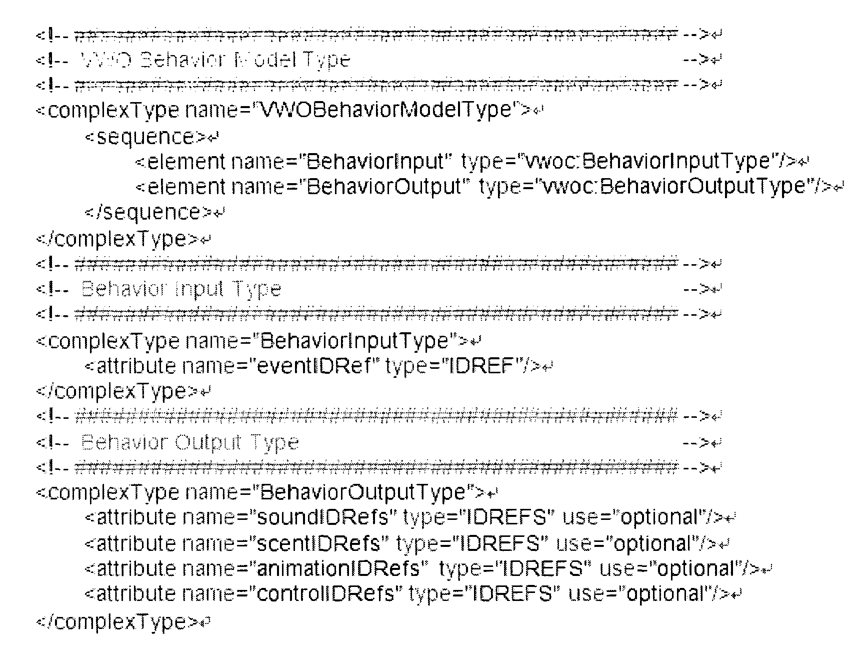

'BehaviorInput' 1120 may indicate an input event to make an object behavior. Depending on embodiments, 'BehaviorInput' 1120 may include attributes 1121.

The attributes 1121 may include 'eventIDRef' 1122. 'eventIDRef' 1122 may indicate a unique ID of an input event.

'BehaviorOutput' 1130 may indicate an output of an object behavior corresponding to an input event. Depending on embodiments, 'BehaviorOutput' 1130 may include attributes 1131.

The attributes 1131 may include 'SoundIDRefs' 1132, 'ScentIDRefs' 1133, 'animationIDRefs' 1134, and 'controlIDRefs' 1135.

'SoundIDRefs' 1132 may refer to a sound ID to provide a sound effect of an object.

'ScentIDRefs' 1133 may refer to a scent ID to provide a scent effect of an object.

'animationIDRefs' 1134 may refer to an animation ID to provide an animation clip of an object.

'controlIDRefs' 1135 may refer to a control ID to provide a control of an object.

A virtual world object according to an embodiment may include common data types for avatar metadata and virtual object metadata. Common data types may be used as basic building blocks. Common data types may include a haptic property type, a description type, an animation description type, an animation resource description type, and other simple data types.

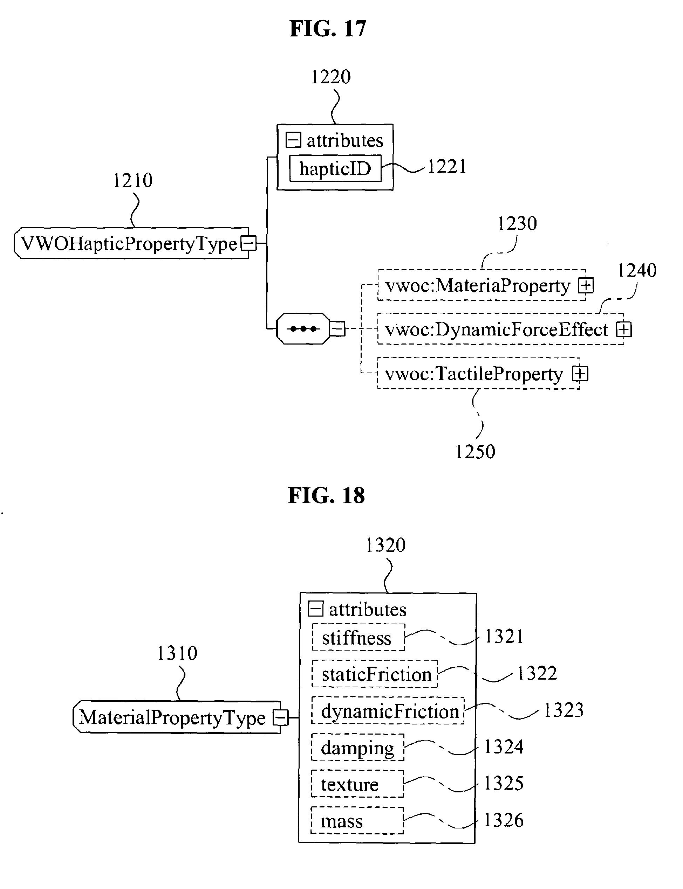

Hereinafter, common data types will be further described with referent to FIGS. 17 and 18.

FIG. 17 illustrates a data structure of 'VWOHapticPropertyType' according to an embodiment.

Referring to FIG. 17, 'VWOHapticPropertyType' 1210 may include attributes 1220, and a plurality of elements, for example, 'MaterialProperty' 1230, 'DynamicForceEffect' 1240, and 'TactileProperty' 1250.

'VWOHapticPropertyType' 1210 may indicate information on the type of a haptic property associated with the virtual world object.

Depending on embodiments, 'VWOHapticPropertyType' 1210 may be represented using the XML, as shown in Source 13. However, a program source of Source 13 is merely an example, and there is no limitation thereto.

### [Source 13]

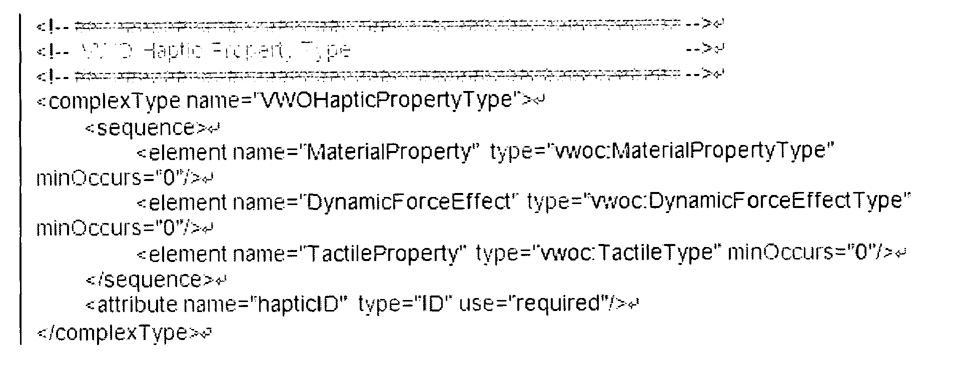

The attributes 1220 may include 'hapticID' 1221.

'hapticID' 1221 may indicate a unique ID of a haptic property.

'VWOHapticPropertyType' 1210 may include 'MaterialProperty' 1230, 'DynamicForceEffect' 1240, and 'TactileProperty' 1250, as described above.

'MaterialProperty' 1230 may contain parameters characterizing material properties.

'DynamicForceEffect' 1240 may contain parameters characterizing force effects.

'TactileProperty' 1250 may contain parameters characterizing tactile properties.

FIG. 18 illustrates a data structure of 'MaterialPropertyType' according to an embodiment.

Referring to FIG. 18, 'MaterialPropertyType' 1310 may include attributes 1320.

The attributes 1320 may include 'Stiffness' 1321, 'StaticFriction' 1322, 'DynamicFriction' 1323, 'Damping' 1324, 'Texture' 1325, and 'Mass' 1326.

'Stiffness' 1321 may indicate a stiffness of the virtual world object. Depending on embodiments, 'Stiffness' 1321 may be expressed in N/mm.

'StaticFriction' 1322 may indicate a static friction of the virtual world object.

'DynamicFriction' 1323 may indicate a dynamic friction of the virtual world object.

'Damping' 1324 may indicate a damping level of the virtual world object.

'Texture' 1325 may indicate a texture of the virtual world object. Depending on embodiments, 'Texture' 1325 may contain a link to a haptic texture file.

'Mass' 1326 may indicate a mass of the virtual world object.

Depending on embodiments, 'MaterialPropertyType' 1310 may be represented using the XML, as shown in Source 14. However, a program source of Source 14 is merely an example, and there is no limitation thereto.

### [Source 14]

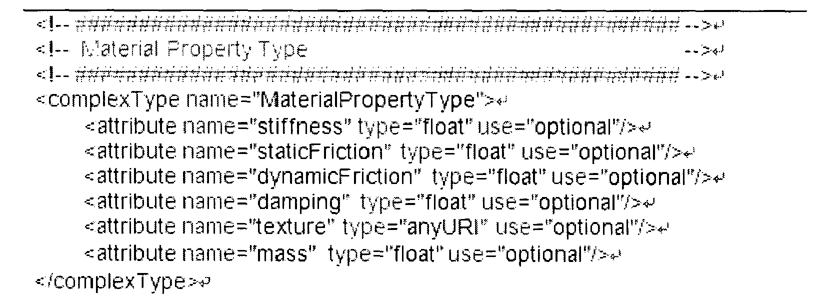

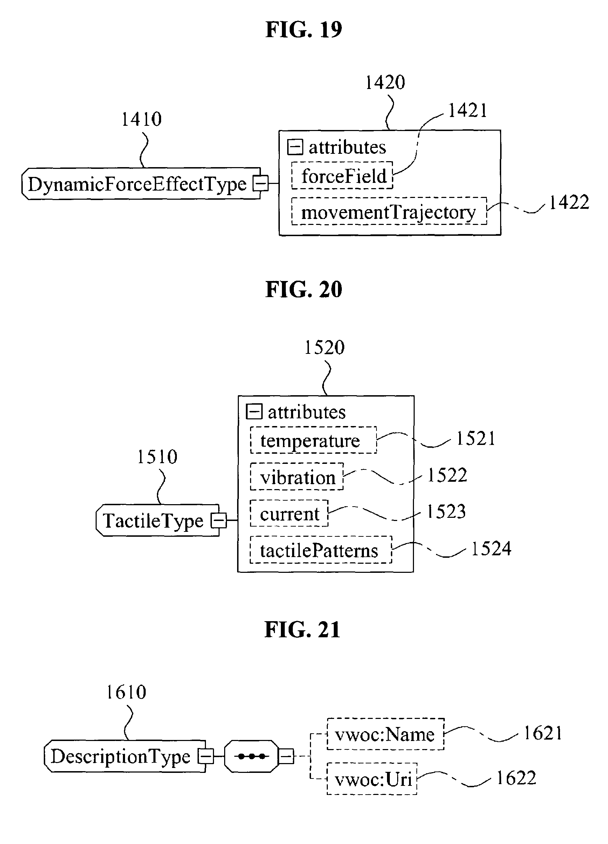

FIG. 19 illustrates a data structure of 'DynamicForceEffectType' according to an embodiment.

Referring to FIG. 19, 'DynamicForceEffectType' 1410 may include attributes 1420.

The attributes 1420 may include 'ForceField' 1421 and 'MovementTrajectory' 1422.

'ForceField' 1421 may contain a link to a force field vector file.

'MovementTrajectory' 1422 may contain a link to a force trajectory file.

Depending on embodiments, 'DynamicForceEffectType' 1410 may be represented using the XML, as shown in Source 15. However, a program source of Source 15 is merely an example, and there is no limitation thereto.

### [Source 15]

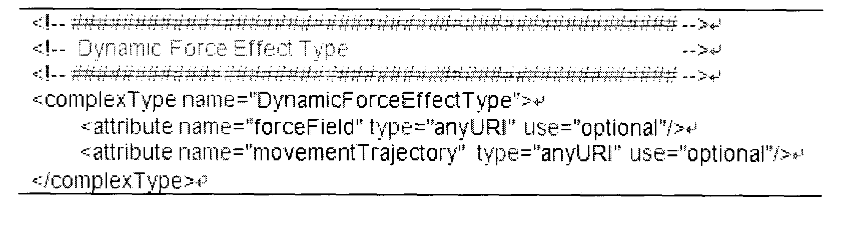

FIG. 20 illustrates a data structure of 'TactileType' according to an embodiment.

Referring to FIG. 20, 'TactileType' 1510 may include attributes 1520.

The attributes 1520 may include 'Temperature' 1521, 'vibration' 1522, 'Current' 1523, and 'TactilePatterns' 1524.

'Temperature' 1521 may indicate a temperature of the virtual world object.

'Vibration' 1522 may indicate a vibration level of the virtual world object.

'Current' 1523 may indicate an electric current of the virtual world object. Depending on embodiments, 'current' 1523 may be expressed in mA.

'TactilePatterns' 1524 may contain a link to a tactile pattern file.

Depending on embodiments, 'TactileType' 1510 may be represented using the XML, as shown in Source 16. However, a program source of Source 16 is merely an example, and there is no limitation thereto.

### [Source 16]

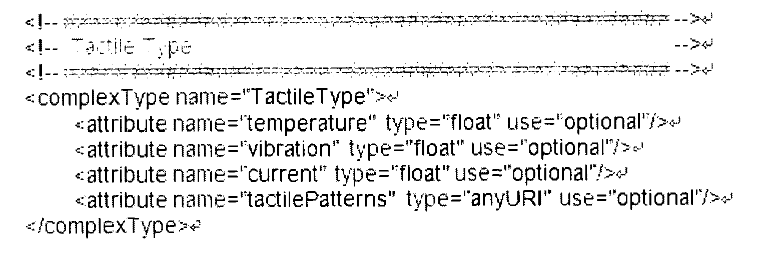

FIG. 21 illustrates a data structure of 'DescriptionType' according to an embodiment.

Referring to FIG. 21, 'DescriptionType' 1610 may include 'Name' 1621 and 'Uri' 1622.

'Uri' 1622 may contain a link to a predetermined resource file.

Depending on embodiments, 'DescriptionType' 1610 may be represented using the XML, as shown in Source 17. However, a program source of Source 17 is merely an example, and there is no limitation thereto.

### [Source 17] '

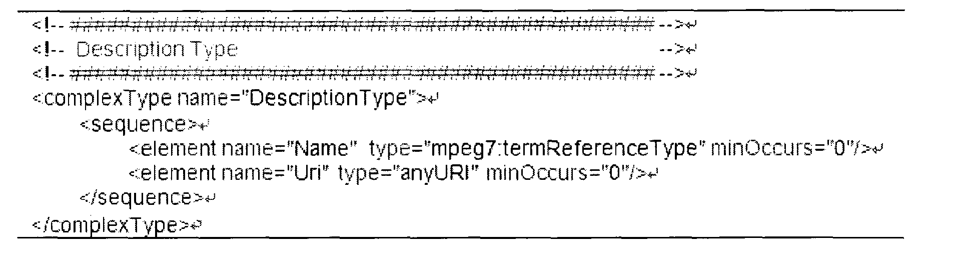

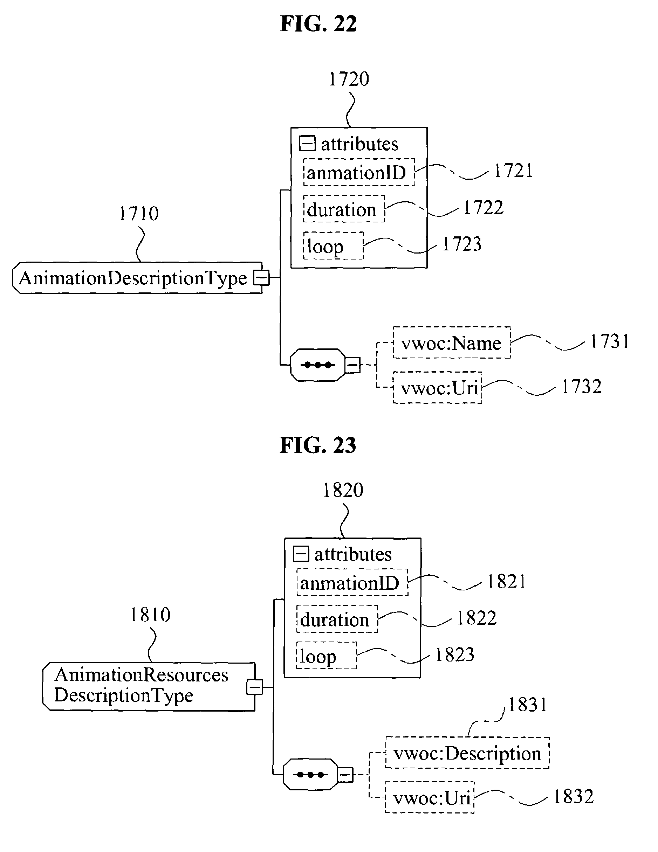

FIG. 22 illustrates a data structure of 'AnimationDescriptionType' according to an embodiment.

Referring to FIG. 22, 'AnimationDescriptionType' 1710 may include attributes 1720, and a plurality of elements, for example, 'Name' 1731 and 'Uri' 1732.

The attributes 1720 may include 'animationID' 1721, 'duration' 1722, and 'loop'1723.

'animationID' 1721 may indicate a unique ID of an animation.

'duration' 1722 may indicate a length of a time that an animation lasts.

'loop'1723 may indicate a number of repetitions of an animation.

'AnimationDescriptionType' 1710 may include 'Name' 1731 and 'Uri' 1732, as described above.

'Uri' 1732 may contain a link to an animation file. Depending on embodiments, the animation file may be an MP4 file.

Depending on embodiments, 'AnimationDescriptionType' 1710 may be represented using the XML, as shown in Source 18. However, a program source of Source 18 is merely an example, and there is no limitation thereto.

### [Source 18]

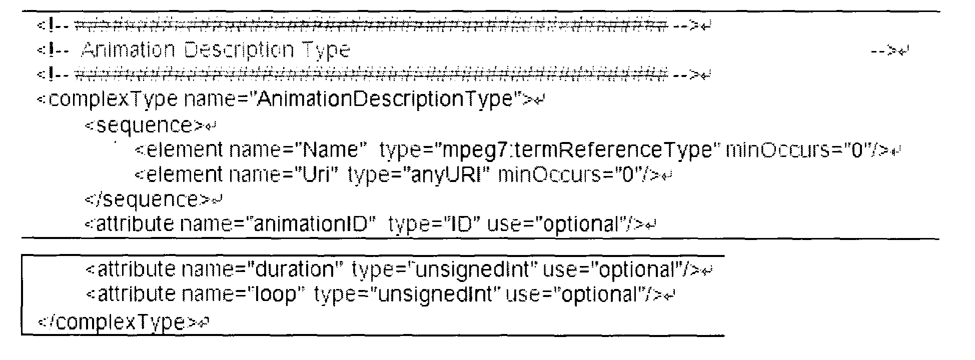

FIG. 23 illustrates a data structure of 'AnimationResourcesDescriptionType' according to an embodiment.

Referring to FIG. 23, 'AnimationResourcesDescriptionType' 1810 may include attributes 1820, and a plurality of elements, for example, 'Description' 1831 and 'Uri' 1832.

The attributes 1820 may include 'animationID' 1821, 'duration' 1822, and 'loop' 1823.

'animationID' 1821 may indicate a unique ID of an animation.

'duration' 1822 may indicate a length of a time that an animation lasts.

'loop' 1823 may indicate a number of repetitions of an animation.

'AnimationResourcesDescriptionType' 1810 may include 'Description' 1831 and 'Uri' 1832, as described above.

'Description' 1831 may include a description of an animation resource.

'Uri' 1832 may contain a link to an animation file. Depending on embodiments, the animation file may be an MP4 file.

Depending on embodiments, 'AnimationResourcesDescriptionType' 1810 may be represented using the XML, as shown in Source 19. However, a program source of Source 19 is merely an example, and there is no limitation thereto.

### [Source 19]

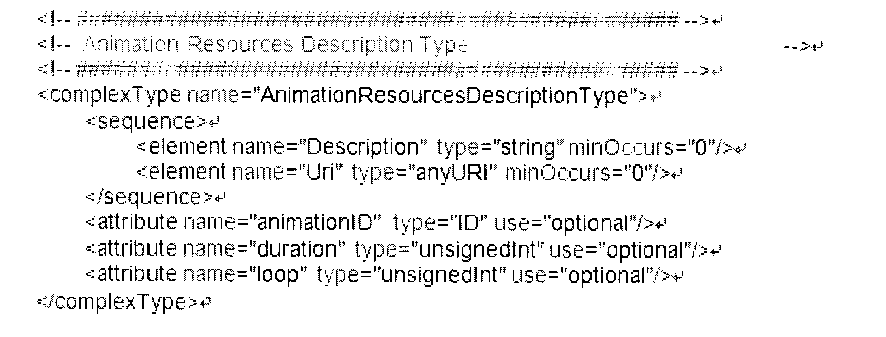

According to an aspect, simple data types may include 'IndicateOfLHType,' 'IndicateOfLMHType,' 'IndicateOfSMBType,' 'IndicateOfSMLType,' 'IndicateOfDMUType,' 'IndicateOfDUType,' 'IndicateOfMNType,' 'IndicateOfRCType,' 'IndicateOfLRType,' 'IndicateOfLMRType,' 'MeasureUnitLMHType,' 'MeasureUnitSMBType,' 'LevelOfSType,' 'AngleType,' 'PercentageType,' 'UnlimitedPercentageType,' and 'PointType.'

'IndicateOfLHType' may indicate whether a value is low, or high.

Depending on embodiments, 'IndicateOfLHType' may be represented using the XML, as shown in Source 20. However, a program source of Source 20 is merely an example, and there is no limitation thereto.

### [Source 20]

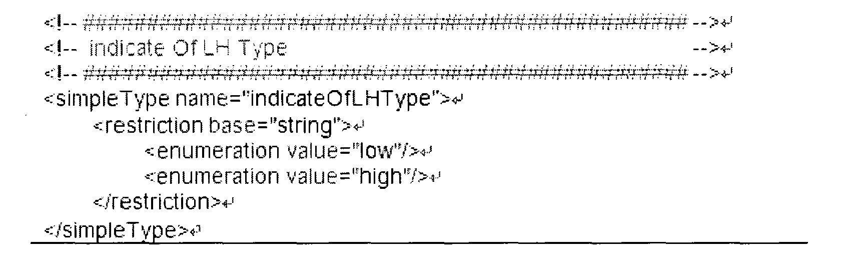

'IndicateOfLMHType' may indicate whether a value is low, medium, or high.

Depending on embodiments, 'IndicateOfLMHType' may be represented using the XML, as shown in Source 21. However, a program source of Source 21 is merely an example, and there is no limitation thereto.

### [Source 21]

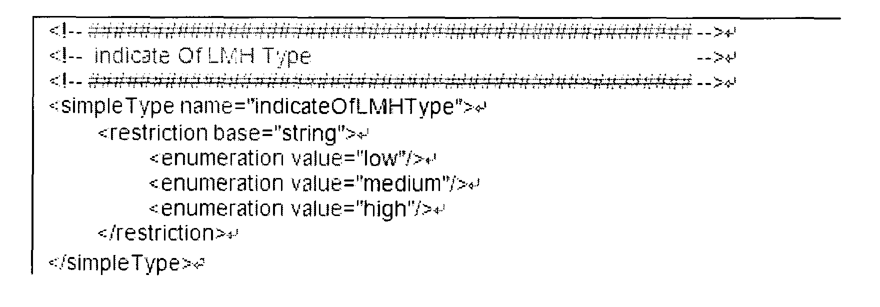

'IndicateOfSMBType' may indicate whether a value is small, medium, or big.

Depending on embodiments, 'IndicateOfSMBType' may be represented using the XML, as shown in Source 22. However, a program source of Source 22 is merely an example, and there is no limitation thereto

### [Source 22]

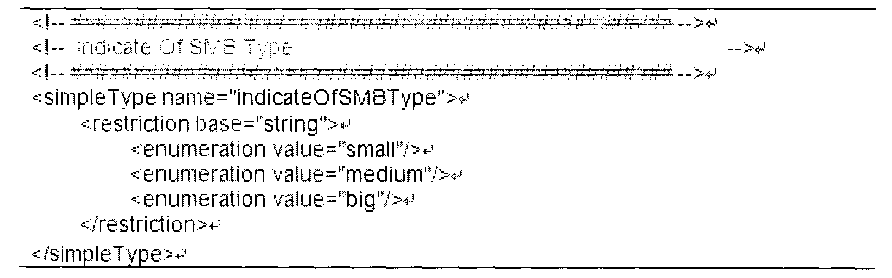

'IndicateOfSMLType' may indicate whether a value is short, medium, or long.

Depending on embodiments, 'IndicateOfSMLType' may be represented using the XML, as shown in Source 23. However, a program source of Source 23 is merely an example, and there is no limitation thereto.

### [Source 23]

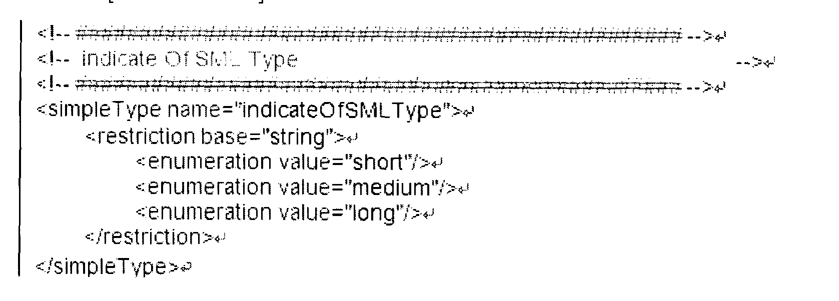

'IndicateOfDMUType' may indicate whether a value is down, medium, or up.

Depending on embodiments, 'IndicateOfDMUType' may be represented using the XML, as shown in Source 24. However, a program source of Source 24 is merely an example, and there is no limitation thereto.

### [Source 24]

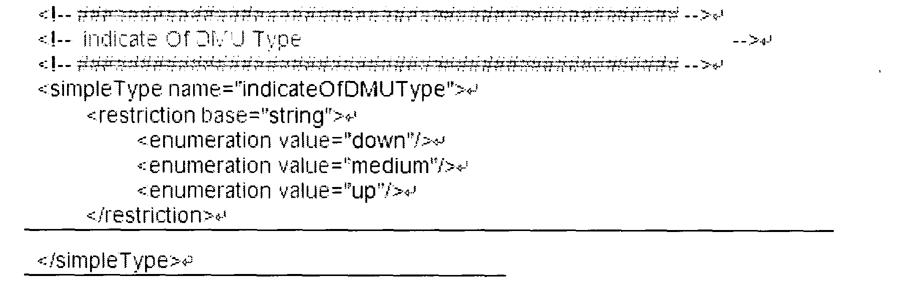

'IndicateOfDUType' may indicate whether a value is down, or up.

Depending on embodiments, 'IndicateOfDUType' may be represented using the XML, as shown in Source 25. However, a program source of Source 25 is merely an example, and there is no limitation thereto.

### [Source 25]

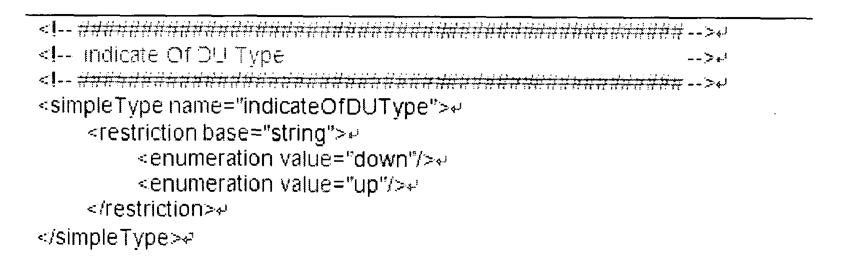

'IndicateOfPMNType' may indicate whether a value is 'pointed,' 'middle,' or 'notpointed.'

Depending on embodiments, 'IndicateOfPMNType' may be represented using the XML, as shown in Source 26. However, a program source of Source 26 is merely an example, and there is no limitation thereto.

### [Source 26]

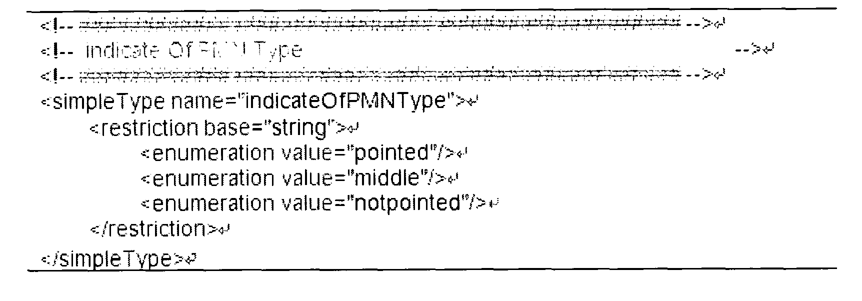

'IndicateOfRCType' may indicate whether a value is 'round,' or 'cleft.'

Depending on embodiments, 'IndicateOfRCType' may be represented using the XML, as shown in Source 27. However, a program source of Source 27 is merely an example, and there is no limitation thereto.

### [Source 27]

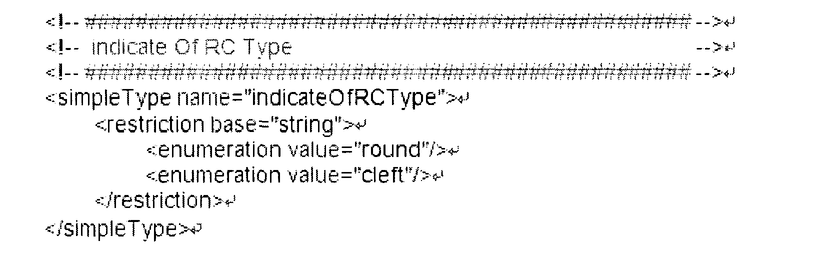

'IndicateOfLRType' may indicate whether a value is left, or right.

Depending on embodiments, 'IndicateOfLRType' may be represented using the XML, as shown in Source 28. However, a program source of Source 28 is merely an example, and there is no limitation thereto.

### [Source 28]

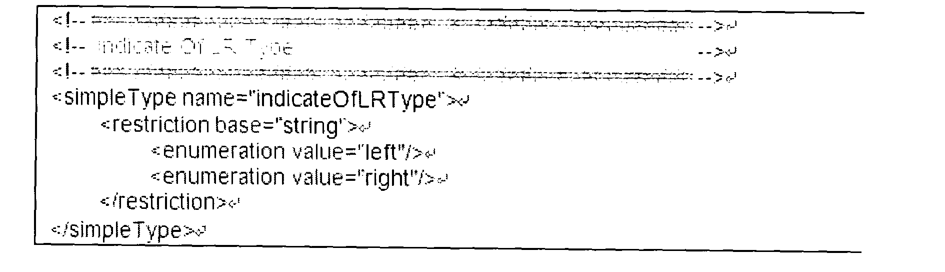

'IndicateOfLMRType' may indicate whether a value is left, middle, or right.

Depending on embodiments, 'IndicateOfLMRType' may be represented using the XML, as shown in Source 29. However, a program source of Source 29 is merely an example, and there is no limitation thereto.

### [Source 29]

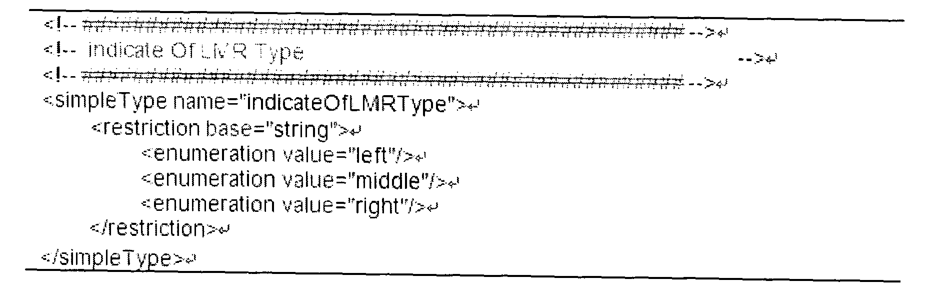

'MeasureUnitLMHType' may indicate either indicateOfLMHType or float.

Depending on embodiments, 'MeasureUnitLMHType' may be represented using the XML, as shown in Source 30. However, a program source of Source 30 is merely an example, and there is no limitation thereto.

### [Source 30]

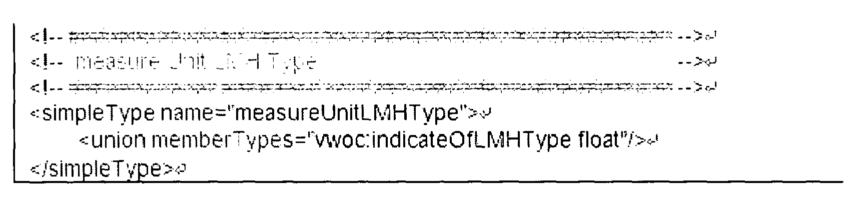

'MeasureUnitSMBType' may indicate either indicateOfSMBType or float.

Depending on embodiments, 'MeasureUnitSMBType' may be represented using the XML, as shown in Source 31. However, a program source of Source 31 is merely an example, and there is no limitation thereto.

### [Source 31]

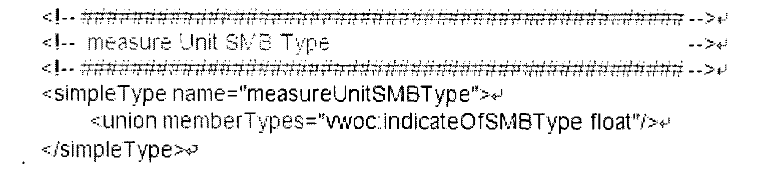

'LevelOf5Type' may indicate a type of integer values from '1' to '5.'

Depending on embodiments, 'LevelOf5Type' may be represented using the XML, as shown in Source 32. However, a program source of Source 32 is merely an example, and there is no limitation thereto.

### [Source 32]

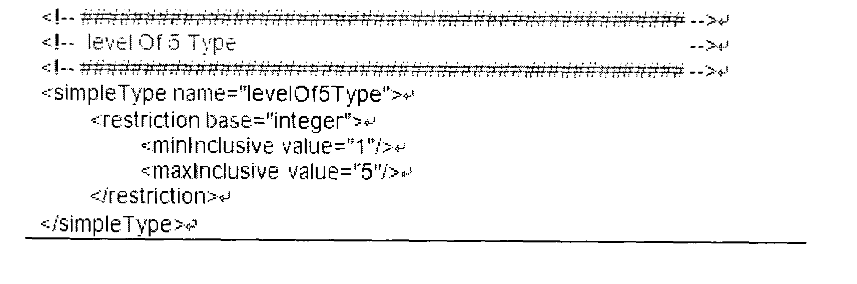

'AngleType' may indicate a type of floating values from 0 degree to 360 degrees.

Depending on embodiments, 'AngleType' may be represented using the XML, as shown in Source 33. However, a program source of Source 33 is merely an example, and there is no limitation thereto.

### [Source 33]

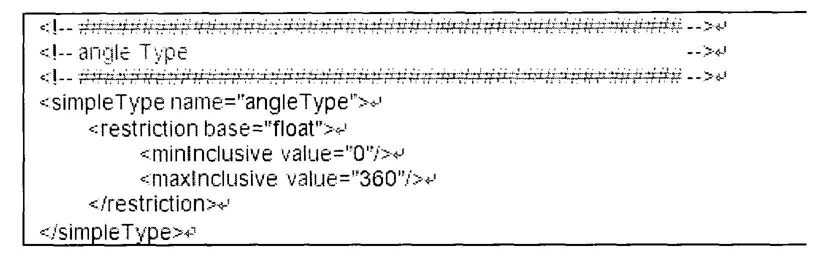

'PercentageType' may indicate a type of floating values from 0 percent to 100 percent.

Depending on embodiments, 'PercentageType' may be represented using the XML, as shown in Source 34. However, a program source of Source 34 is merely an example, and there is no limitation thereto.

### [Source 34]

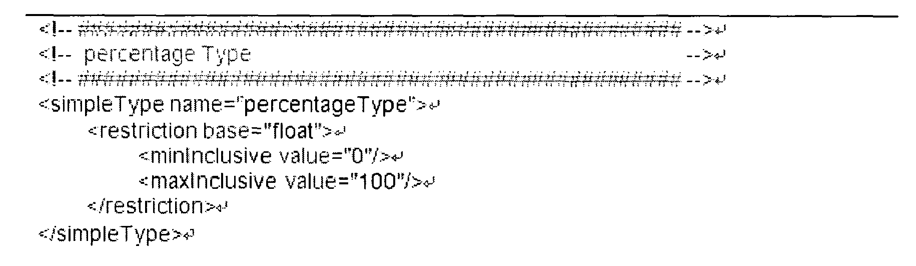

'UnlimitedPercentageType' may indicate a type of floating values from 0 percent.

Depending on embodiments, 'UnlimitedPercentageType' may be represented using the XML, as shown in Source 35. However, a program source of Source 35 is merely an example, and there is no limitation thereto.

### [Source 35]

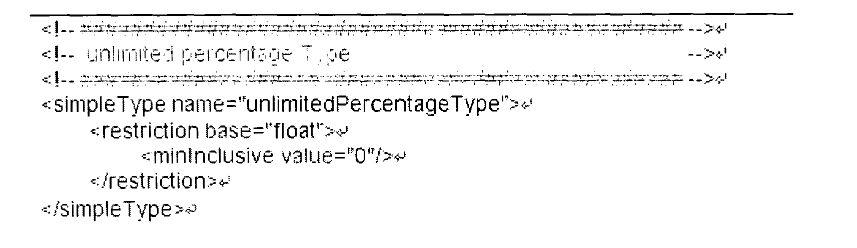

'PointType' may indicate a type of floating values from 0 percent.

'PointType' may indicate a type to provide a root for two point types, namely, 'LogicalPointType' and 'Physical3DPointType' that specify a feature point for face feature control.

'LogicalPointType' may indicate a type providing a name of the feature point.

'Physical3DPointType' may indicate a type providing a 3D point vector value.

Depending on embodiments, 'PointType' may be represented using the XML, as shown in Source 36. However, a program source of Source 36 is merely an example, and there is no limitation thereto.

### [Source 36]

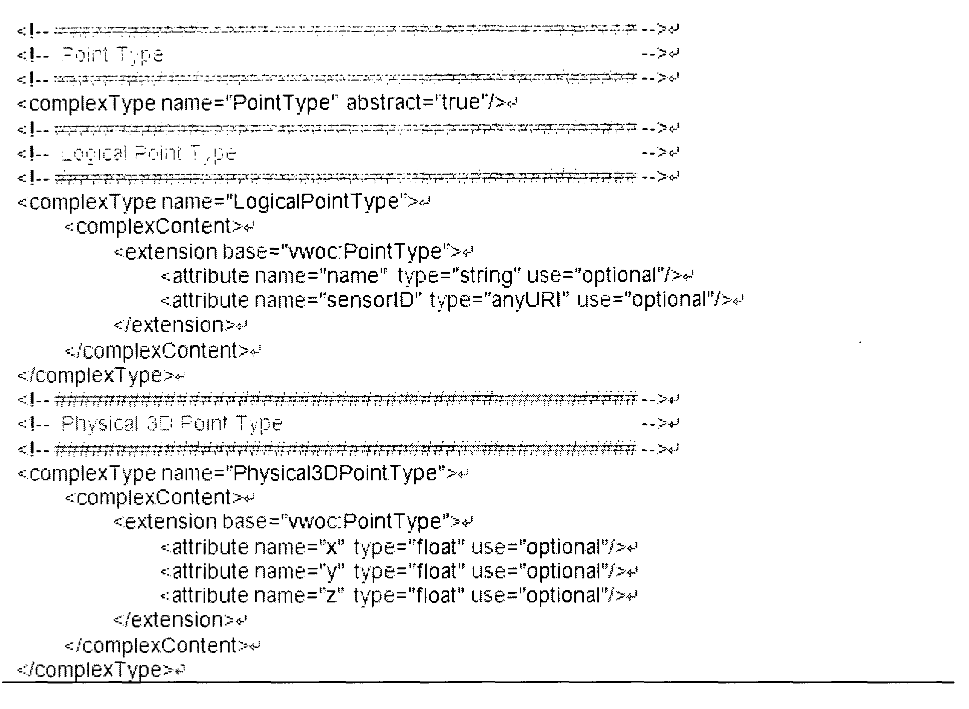

A virtual object within a virtual environment according to an embodiment may be represented as virtual object metadata.

The virtual object metadata may characterize various types of objects within the virtual environment. Additionally, the virtual object metadata may provide an interaction between an avatar and the virtual object. Furthermore, the virtual object metadata may provide an interaction within the virtual environment.

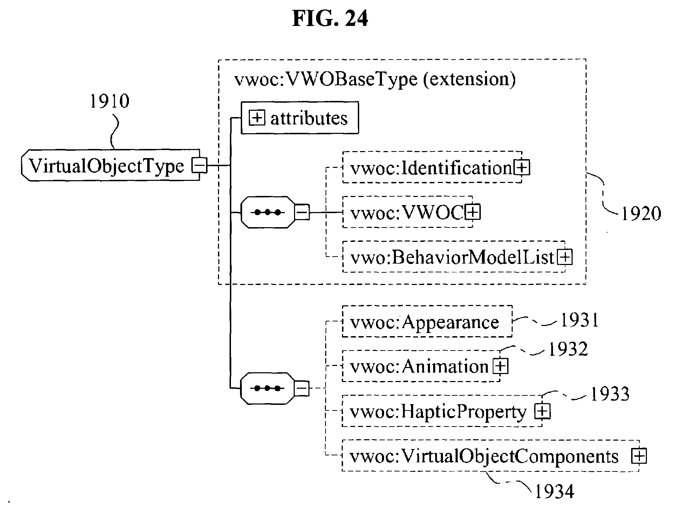

The virtual object may include elements 'Appearance' and 'Animation', with extension of a base type of a virtual world object. Hereinafter, the virtual object will be further described with reference to FIG. 24.

FIG. 24 illustrates a data structure of 'VirtualObjectType' according to an embodiment.

Referring to FIG. 24, 'VirtualObjectType' 1910 may include a plurality of elements, for example, 'Appearance' 1931, 'Animation' 1932, 'HapticProperty' 1933, and 'VirtualObjectComponents' 1934, with extension of 'VWOBaseType' 1920.

'VirtualObjectType' 1910 may indicate a data type associated with a virtual object.

'VWOBaseType' 1920 may have the same structure as 'VWOBaseType' 510 of FIG. 5. In other words, to extend a predetermined aspect of virtual object metadata associated with the virtual object, 'VWOBaseType' 1920 may be inherited to the virtual object metadata.

'VirtualObjectType' 1910 may include 'Appearance' 1931, and 'Animation' 1932. Depending on embodiments, 'VirtualObjectType' 1910 may further include 'HapticProperty' 1933, and 'VirtualObjectComponents' 1934.

'Appearance' 1931 may include at least one resource link to an appearance file describing tactile and visual elements of the virtual object.

'Animation' 1932 may include a set of metadata describing pre-recorded animations associated with the virtual object.

'HapticProperty' 1933 may include a set of descriptors of haptic properties defined in the 'VWOHapticPropertyType' 1210 of FIG. 17.

'VirtualObjectComponents' 1934 may include a list of virtual objects that are concatenated to the virtual object as components.

Depending on embodiments, 'VirtualObjectType' 1910 may be represented using the XML, as shown in Source 37. However, a program source of Source 37 is merely an example, and there is no limitation thereto.

### [Source 37]

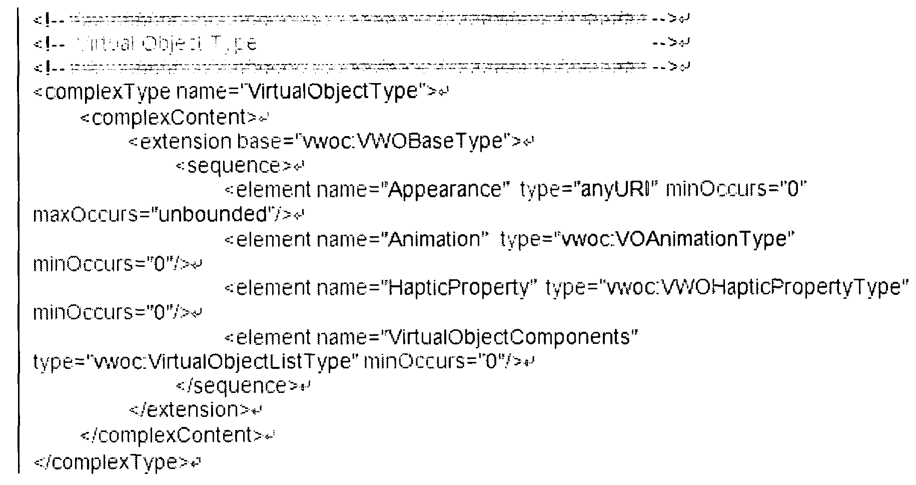

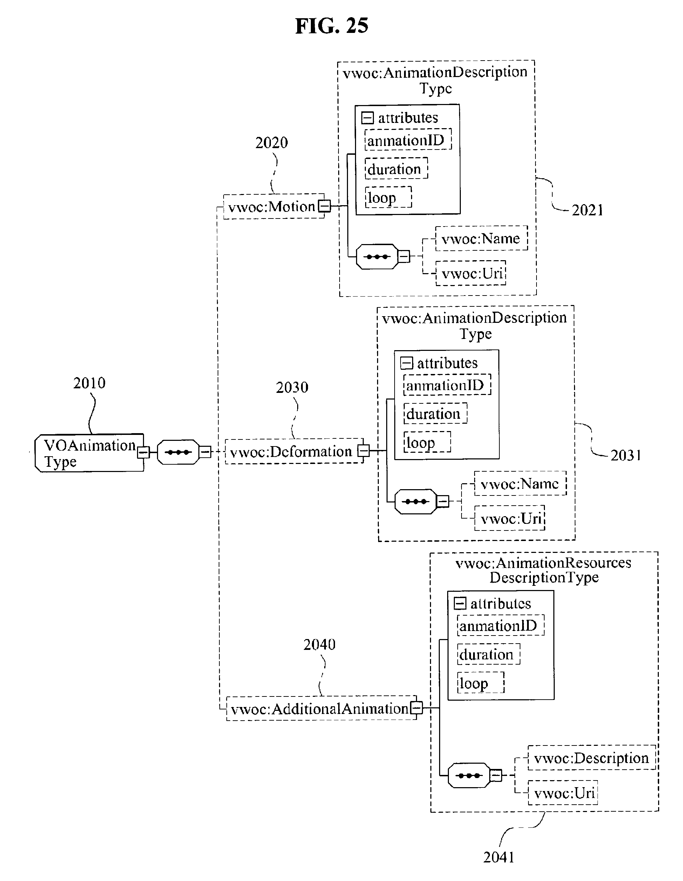

FIG. 25 illustrates a data structure of 'VOAnimationType' according to an embodiment.

Referring to FIG. 25, 'VOAnimationType' 2010 may include 'Motion' 2020, 'Deformation' 2030, and 'AdditionalAnimation' 2040.

'Motion' 2020 may indicate a set of animations defined as rigid motions. Depending on embodiments, 'Motion' 2020 may include 'AnimationDescriptionType' 2021. 'AnimationDescriptionType' 2021 may have the same structure as 'AnimationDescriptionType' 1710 of FIG. 22.

Table 4 shows examples of 'Motion' 2020.

**[Table 4]**

| Name | Description |
|---|---|
| MoveDown | move down |
| MoveLeft | move left |
| MoveRight | move right |
| MoveUp | move up |
| Turn180 | make a turn for 180° |
| Turnback180 | make a turn back for 180° |
| Turnleft | turn left |
| Turnright | turn right |
| Turn360 | make a turn for 360° |
| Turnback360 | make a turn back for 360° |
| FreeDirection | Move to an arbitrary direction |
| Appear | appear from somewhere |
| Away | go away |
| Disappear | disappear somewhere |
| Falldown | falling down |
| Bounce | Bounce |
| Toss | Toss |
| Spin | Spin |
| Fly | Fly |
| Vibrate | Vibrate |
| Flow | Flow |

'Deformation' 2030 may indicate a set of deformation animations. Depending on embodiments 'Deformation' 2030 may include 'AnimationDescriptionType' 2031. 'AnimationDescriptionType' 2031 may have the same structure as 'AnimationDescriptionType' 1710 of FIG. 22.

Table 5 shows examples of 'Deformation' 2030.

**[Table 5]**

| Name | Description |
|---|---|
| Flip | Flip |
| Stretch | Stretch |
| Swirl | Swirl |
| Twist | Twist |
| Bend | Bend |
| Roll | Roll |
| Press | Press |
| FallToPieces | Falling to pieces |
| Explode | Exploding |
| Fire | firing |

'AdditionalAnimation' 2040 may include at least one link to an animation file. Depending on embodiments, 'AdditionalAnimation' 2040 may include 'AnimationResourcesDescriptionType' 2041. 'AnimationResourcesDescriptionType' 2041 may have the same structure as 'AnimationResourcesDescriptionType' 1810 of FIG. 23.

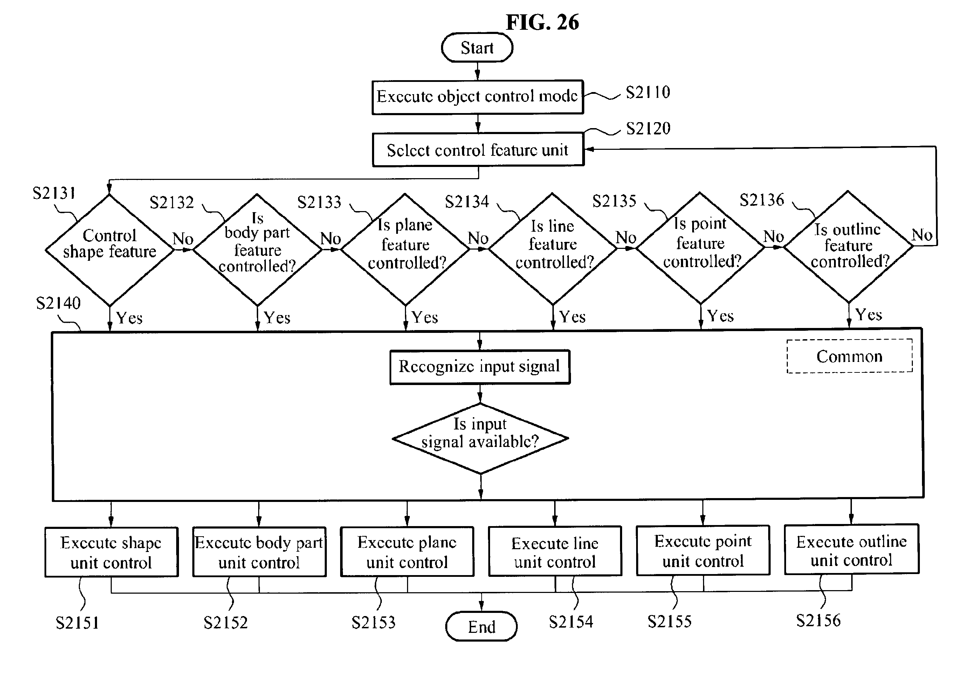

FIG. 26 is a flowchart illustrating a method of controlling an object of a virtual world in a virtual world processing apparatus according to an embodiment.

Referring to FIG. 26, in operation S2110, the virtual world processing apparatus may execute a mode (namely, an object control mode) to control the object of the virtual world.

In operation S2120, the virtual world processing apparatus may select a control feature unit to control the object of the virtual world. Depending on embodiments, the control feature unit may control one of an overall shape of an object, a body part of the object, a plane of the object, a line of the object, a vertex of object, and an outline of the object.

In operation S2131, the virtual world processing apparatus may determine whether the selected control feature unit is a shape feature control of controlling a shape feature associated with the entire object of the virtual world.

When the selected control feature unit is the shape feature control, the virtual world processing apparatus may recognize an input signal, and may determine whether the input signal is available in operation S2140.

When the input signal is available, the virtual world processing apparatus may perform a control of a shape unit with respect to the object of the virtual world in operation S2151.

When the selected control feature unit is not the shape feature control, the virtual world processing apparatus may determine whether the selected control feature unit is a body part feature control of controlling features associated with the body part of the object of the virtual world in operation S2132.

When the selected control feature unit is the body part feature control, the virtual world processing apparatus may recognize an input signal, and determine whether the input signal is available in operation S2140.

When the input signal is available, the virtual world processing apparatus may perform a control of a body part unit with respect to the object of the virtual world in operation S2152.

When the selected control feature unit is not the body part feature control, the virtual world processing apparatus may determine whether the selected control feature unit is a plane feature control of controlling features associated with the plane of the object of the virtual world in operation S2133.

When the selected control feature unit is the plane feature control, the virtual world processing apparatus may recognize an input signal, and may determine whether the input signal is available in operation S2140.

When the input signal is available, the virtual world processing apparatus may perform a control of a plane unit with respect to the object of the virtual world in operation S2153.

When the selected control feature unit is not the plane feature control, the virtual world processing apparatus may determine whether the selected control feature unit is a line feature control of controlling features associated with the line of the object of the virtual world in operation S2134.

When the selected control feature unit is the line feature control, the virtual world processing apparatus may recognize an input signal, and may determine whether the input signal is available in operation S2140.

When the input signal is available, the virtual world processing apparatus may perform a control of a line unit with respect to the object of the virtual world in operation S2154.

When the selected control feature unit is not the line feature control, the virtual world processing unit may determine whether the selected control feature unit is a vertex feature control of controlling features associated with the vertex of the object of the virtual world in operation S2135.

When the selected control feature unit is the vertex feature control, the virtual world processing unit may recognize an input signal, and may determine whether the input signal is available in operation S2140.

When the input signal is available, the virtual world processing apparatus may perform a control of a vertex unit with respect to the object of the virtual world in operation S2155.

When the selected control feature unit is not the vertex feature control, the virtual world processing apparatus may determine whether the selected control feature unit is an outline feature control of controlling features associated with a specific outline of the object of the virtual world in operation S2136. The specific outline may be designated by a user.

When the selected control feature unit is the outline feature control, the virtual world processing apparatus may recognize an input signal, and may determine whether the input signal is available in operation S2140.

When the input signal is available, the virtual world processing apparatus may perform a control of a specific outline unit designated by the user with respect to the object of the virtual world in operation S2156.

When the selected control feature unit is not the outline feature control, the virtual world processing apparatus may select a control feature unit again in operation S2120.

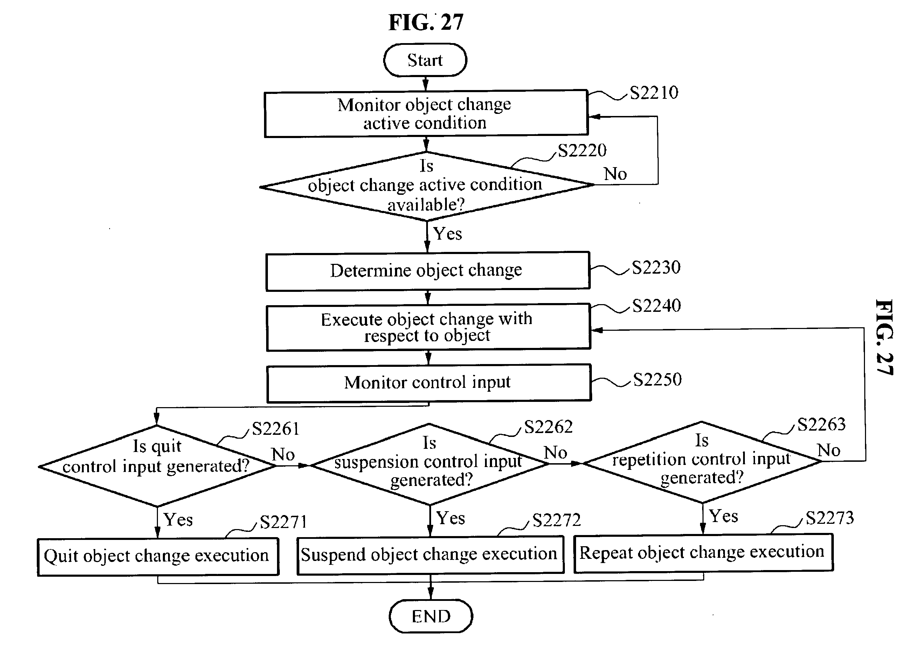

FIG. 27 is a flowchart illustrating a method of executing object change with respect to an object of a virtual world in a virtual world processing apparatus according to an embodiment.

Referring to FIG. 27, in operation S2210, the virtual world processing apparatus may monitor a condition (namely, an active condition) in which object change with respect to the object of the virtual world is activated. The active condition of the object change with respect to the object of the virtual world may be determined in advance. For example, the active condition may include a case where an avatar comes within a predetermined distance facing the object of the virtual world, a case of touching the object of the virtual world, and a case of raising the object of the virtual world.

In operation S2220, the virtual world processing apparatus may determine whether the active condition is an available active condition in which the active condition is satisfied.

When the active condition is not the available active condition, the virtual world processing apparatus may return to operation S2210, and monitor the active condition of the object change.

When the active condition is the available active condition, the virtual world processing apparatus may determine the object change regarding the active condition in operation S2230. Depending on embodiments, the virtual world processing apparatus may include a database to store content and the active condition of the object change, and may identify the object change corresponding to the available active condition from the database.

In operation S2240, the virtual world processing apparatus may determine the object change regarding the active condition, and may perform the object change with respect to the object of the virtual world.

In operation S2250, the virtual world processing apparatus may monitor whether a control input for controlling the object of the virtual world is generated.

In operation S2261, the virtual world processing apparatus may determine whether a quit control input of quitting an execution of the object change with respect to the object of the virtual world is generated as the control input.

When the quit control input is generated, the virtual world processing apparatus may quit the execution of the object change with respect to the object of the virtual world in operation S2271.

When the quit control input is not generated, the virtual world processing apparatus may determine whether a suspension control input of suspending the execution of the object change with respect to the object of the virtual world is generated as the control input in operation S2262.

When the suspension control input is generated, the virtual world processing apparatus may suspend the execution of the object change with respect to the object of the virtual world in operation S2272.

When the suspension control input is not generated, the virtual world processing apparatus may determine whether a repetition control input of repeatedly executing the object change with respect to the object of the virtual world is generated as the control input in operation S2263.

When the repetition control input is generated, the virtual world processing apparatus may repeatedly perform the execution of the object change in operation S2273.

When the repetition control input is not generated, the virtual world processing apparatus may return to operation S2240, and may execute the object change with respect to the object of the virtual world.

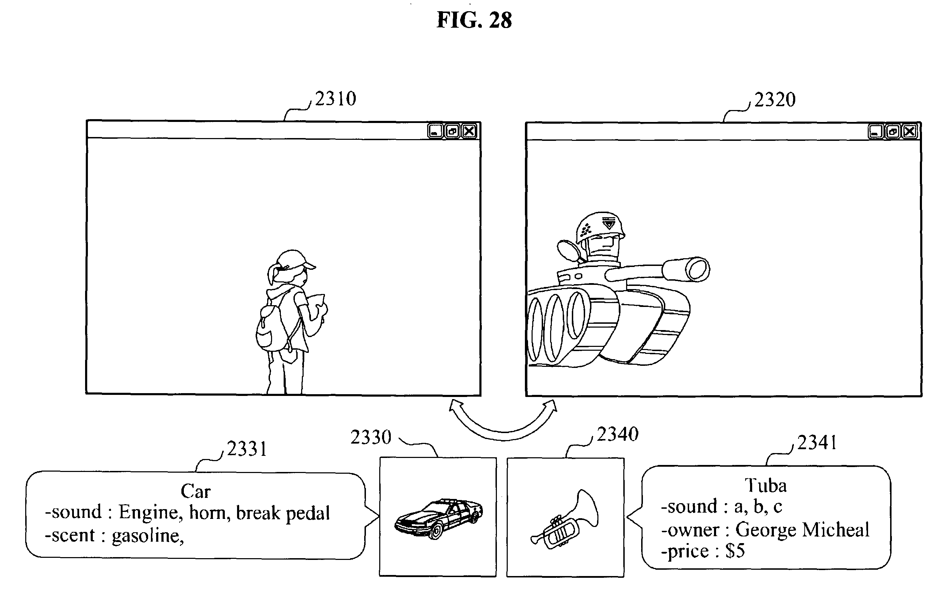

FIG. 28 illustrates an operation in which a virtual world processing apparatus converts an identical object, and applies the converted object to virtual worlds that are different from each other, according to an embodiment.

Referring to FIG. 28, a first virtual world 2310 may include a vehicle 2330, and a musical instrument 2340.

The vehicle 2330, as an object in a virtual world, may include information 2331 regarding the vehicle 2330, for example information regarding an engine, a horn, sound of a brake pedal, and scent of gasoline.

The musical instrument 2340, as an object in a virtual world, may include information 2341 regarding the musical instrument 2340 that includes information on sounds 'a,' 'b,' and 'c,' owner information, for example George Michael, and price information, for example 5 dollars.

The virtual world processing apparatus may enable a virtual object to migrate from a virtual world to another virtual world.

For example, the virtual world processing apparatus may generate objects corresponding to the vehicle 2330 and the musical instrument 2340 in a second virtual world 2320, based on the information 2331 and 2341 that are respectively associated with the vehicle 2330 and the musical instrument 2340 implemented in the first virtual world 2310. In this instance, the second virtual world 2320 may be different from the first virtual world 2310.

Depending on embodiments, objects of the second virtual world 2320 may include the same information as the information 2331 and 2341 associated with the vehicle 2330 and the musical instrument 2340, namely, the objects implemented in the first virtual world 2310. Alternatively, the objects of the second virtual world 2320 may include information obtained by changing the information 2331 and 2341 associated with the vehicle 2330 and the musical instrument 2340.

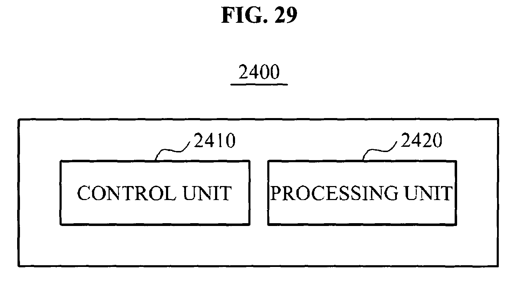

FIG. 29 illustrates a configuration of a virtual world processing apparatus according to an embodiment.

Referring to FIG. 29, a virtual world processing apparatus 2400 may include a control unit 2410, and a processing unit 2420.

The control unit 2410 may control a virtual world object in a virtual world. The virtual world object may be classified into an avatar and a virtual object. The data structures of FIGS. 5 through 25 may be applied to the virtual world object and the virtual object.

Accordingly, the virtual object may include elements 'Appearance' and 'Animation,' with extension of the base type of the virtual world object.

The virtual world object may include an attribute 'ID,' and characteristics 'Identity,' 'Sound,' 'Scent,' 'Control,' 'Event,' and 'BehaviorModel.'

'Sound' may include 'SoundID' indicating a unique ID of an object sound, 'Intensity' indicating a strength of the object sound, 'Duration' indicating a length of a time that the object sound lasts, 'Loop' indicating a number of repetitions of the object sound, and 'Name' indicating a name of the object sound.

'Scent' may include 'ScentID' indicating a unique ID of an object scent, 'Intensity' indicating a strength of the object scent, 'Duration' indicating a length of a time that the object scent lasts, 'Loop' indicating a number of repetitions of the object scent, and 'Name' indicating a name of the object scent.

Additionally, 'Control' may include an attribute 'ControlID' indicating a unique ID of a control, and include elements 'Position,' 'Orientation,' and 'ScaleFactor.'

Furthermore, 'Event' may include an attribute 'EventID' indicating a unique ID of an event, and include elements 'Mouse,' 'Keyboard,' 'SensorInput,' and 'UserDefinedInput.'

'BehaviorModel' may include 'BehaviorInput,' and 'BehaviorOutput.' 'BehaviorInput' may include an attribute 'EventIDRef,' and 'BehaviorOutput' may include attributes 'SoundIDRefs,' 'ScentIDRefs,' 'animationIDRefs,' and 'controlIDRefs.'

'Animation' may include elements 'Motion,' 'Deformation,' and 'AdditionalAnimation.'

According to an aspect, the virtual world processing apparatus 2400 may further include the processing unit 2420.

The processing unit 2420 may enable a virtual object to migrate from a virtual world to another virtual world.

The above-described embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the example embodiments, or they may be of the kind well-known and available to those having skill in the computer software arts. Examples of non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described example embodiments, or vice versa.

Although example embodiments have been shown and described, it would be appreciated by those skilled in the art that changes may be made in these example embodiments without departing from the principles and spirit of the disclosure, the scope of which is defined in the claims and their equivalents.

## Claims

1. A virtual world processing apparatus for enabling an interoperability between a virtual world and a real world or an interoperability between virtual worlds, the virtual world processing apparatus comprising:
a control unit to control a virtual world object in a virtual world,
wherein the virtual world object is classified into an avatar and a virtual object, and
wherein the virtual object includes elements 'Appearance' and 'Animation' with extension of a base type of the virtual world object.

2. The virtual world processing apparatus of claim 1, wherein the virtual world object includes an attribute 'ID,' and characteristics 'Identity,' 'Sound,' 'Scent,' 'Control,' 'Event,' and 'Behavior Model.'

3. The virtual world processing apparatus of claim 1, further comprising:
a processing unit to enable the virtual object to migrate from the virtual world to another virtual world.

4. The virtual world processing apparatus of claim 1, wherein 'Animation' includes elements 'Motion,' 'Deformation,' and 'AdditionalAnimation.'

5. The virtual world processing apparatus of claim 2, wherein 'Sound' comprises attributes:
'SoundID' indicating a unique identifier (ID) of an object sound;
'Intensity' indicating a strength of the object sound;
'Duration' indicating a length of a time that the object sound lasts;
'Loop' indicating a number of repetitions of the object sound; and
'Name' indicating a name of the object sound.

6. The virtual world processing apparatus of claim 2, wherein 'Scent' comprises attributes:
'ScentID' indicating a unique ID of an object scent;
'Intensity' indicating a strength of the object scent;
'Duration' indicating a length of a time that the object scent lasts;
'Loop' indicating a number of repetitions of the object scent; and
'Name' indicating a name of the object scent.

7. The virtual world processing apparatus of claim 2, wherein 'Control' comprises an attribute 'ControlID' indicating a unique ID of a control, and comprises elements 'Position,' 'Orientation,' and 'ScaleFactor.'

8. The virtual world processing apparatus of claim 2, wherein 'Event' comprises an attribute 'EventID' indicating a unique ID of an event, and comprises elements 'Mouse,' 'Keyboard,' 'SensorInput,' and 'UserDefinedInput.'

9. The virtual world processing apparatus of claim 2, wherein 'BehaviorModel' comprises:
'BehaviorInput'; and
'BehaviorOutput,'
wherein 'BehaviorInput' comprises an attribute 'eventIDRef,' and 'BehaviorOutput' comprises attributes 'SoundIDRefs,' 'ScentIDRefs,' 'animationIDRefs,' and 'controlIDRefs.'
